# EUROPEAN PATENT APPLICATION

(11) **EP 4 804 443 A1**
(43) Date of publication of application: **09.09.2026**
(21) Application number: 23957358.7
(22) Date of filing: 03.11.2023
(51) Int. Cl.: H04L 5/00, H04W 72/20

(54) **COMMUNICATION METHOD, APPARATUS AND DEVICE, CHIP, STORAGE MEDIUM, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); XIAO, Han, Dongguan, Guangdong 523860 (CN); TIAN, Wenqiang, Dongguan, Guangdong 523860 (CN)
(74) Representative: Penza, Giancarlo
(86) International application number: PCT/CN2023/129761
(87) International publication number: WO 2025/091502

(57) **Abstract**

The present application provides a communication method, apparatus and device, a chip, a storage medium, a product and a program. The method comprises: a first device receiving first information from a second device, wherein the first information is used for indicating a first pilot signal of a control channel, and the first pilot signal is one or more of a plurality of pilot signals.

## Description

### TECHNICAL FIELD

Embodiments of the present disclosure relate to the field of communication technologies, and in particular, to a communication method, apparatus, device, chip, storage medium, product, and program.

### BACKGROUND

In the related art, for some specific terminal devices, a pilot signal of a control channel is generally pre-defined, resulting in poor flexibility of the pilot signal.

### SUMMARY

Embodiments of the present disclosure provide a communication method, apparatus, device, chip, storage medium, product, and program.

In a first aspect, a communication method provided by an embodiment of the present disclosure includes:
receiving, by a first device, first information from a second device, where the first information is used to indicate a first pilot signal of a control channel, and the first pilot signal is one or more of a plurality of pilot signals.

In a second aspect, a communication method provided by an embodiment of the present disclosure includes:
sending, by a second device, first information to a first device, where the first information is used to indicate a first pilot signal of a control channel, and the first pilot signal is one or more of a plurality of pilot signals.

In a third aspect, a communication apparatus provided by an embodiment of the present disclosure, applied to a first device, includes:
a first receiving unit configured to receive first information from a second device, where the first information is used to indicate a first pilot signal of a control channel, and the first pilot signal is one or more of a plurality of pilot signals.

In a fourth aspect, a communication apparatus provided by an embodiment of the present disclosure, applied to a second device, includes:
a second sending unit configured to send first information to a first device, where the first information is used to indicate a first pilot signal of a control channel, and the first pilot signal is one or more of a plurality of pilot signals.

In a fifth aspect, a communication device provided by an embodiment of the present disclosure includes a processor and a memory. The memory is configured to store computer-executable instructions, and the processor is connected to the memory and configured to implement the communication method of the first aspect or the second aspect by executing the computer-executable instructions.

In a sixth aspect, an embodiment of the present disclosure provides a chip for implementing the communication method of the first aspect or the second aspect.

Specifically, the chip includes: a processor configured to call and run a computer program from a memory, so that a device installed with the chip executes the communication method of the first aspect or the second aspect.

In a seventh aspect, an embodiment of the present disclosure provides a computer-readable storage medium storing a computer program, where the computer program, when executed by at least one processor, implements the communication method of the first aspect or the second aspect.

In an eighth aspect, an embodiment of the present disclosure provides a computer program product, including a computer storage medium storing a computer program, where the computer program includes instructions executable by at least one processor, and when the instructions are executed by the at least one processor, the communication method of the first aspect or the second aspect is implemented.

In a ninth aspect, an embodiment of the present disclosure provides a computer program, which, when run on a computer, causes the computer to execute the communication method of the first aspect or the second aspect.

Embodiments of the present disclosure provide a communication method. A first device can receive first information from a second device, where the first information is used to indicate a first pilot signal of a control channel, and the first pilot signal is one or more of a plurality of pilot signals. In this way, by indicating the first pilot signal of the control channel through the first information, the flexibility of the first pilot signal can be improved; after receiving the first information, the first device can obtain the first pilot signal matching its actual wireless environment, thereby achieving good performance.

### BRIEF DESCRIPTION OF DRAWINGS

The accompanying drawings described herein are used to provide a further understanding of the present disclosure and constitute a part of the present disclosure. The illustrative embodiments of the present disclosure and their descriptions are used to explain the present disclosure and do not constitute an improper limitation of the present disclosure. In the drawings:
FIG. 1 is a schematic diagram of a communication architecture;
FIG. 2A is a first schematic diagram of a scenario of a demodulation reference signal for one symbol;
FIG. 2B is a first schematic diagram of a scenario of a demodulation reference signal for two symbols;
FIG. 3A is a second schematic diagram of a scenario of a demodulation reference signal for one symbol;
FIG. 3B is a second schematic diagram of a scenario of a demodulation reference signal for two symbols;
FIG. 4 is a schematic flowchart of a communication method provided by an embodiment of the present disclosure;
FIG. 5 is a first schematic diagram of a scenario of time-frequency resources for transmitting a pilot signal and control information according to an embodiment of the present disclosure;
FIG. 6 is a second schematic diagram of a scenario of time-frequency resources for transmitting a pilot signal and control information according to an embodiment of the present disclosure;
FIG. 7 is a third schematic diagram of a scenario of time-frequency resources for transmitting a pilot signal and control information according to an embodiment of the present disclosure;
FIG. 8 is a fourth schematic diagram of a scenario of time-frequency resources for transmitting a pilot signal and control information according to an embodiment of the present disclosure;
FIG. 9 is a fifth schematic diagram of a scenario of time-frequency resources for transmitting a pilot signal and control information according to an embodiment of the present disclosure;
FIG. 10 is a first schematic diagram of a frequency domain position of time-frequency resources occupied by a pilot signal according to an embodiment of the present disclosure;
FIG. 11 is a second schematic diagram of a frequency domain position of time-frequency resources occupied by a pilot signal according to an embodiment of the present disclosure;
FIG. 12 is a schematic structural composition diagram of a communication apparatus 1200 provided by an embodiment of the present disclosure;
FIG. 13 is a schematic structural composition diagram of a communication apparatus 1300 provided by an embodiment of the present disclosure;
FIG. 14 is a schematic structural diagram of a communication device according to an embodiment of the present disclosure;
FIG. 15 is a schematic structural diagram of a chip according to an embodiment of the present disclosure; and
FIG. 16 is a schematic block diagram of a communication system according to an embodiment of the present disclosure.

### DETAILED DESCRIPTION OF EMBODIMENTS

The technical solutions in the embodiments of the present disclosure will be described below with reference to the accompanying drawings in the embodiments of the present disclosure. Apparently, the described embodiments are some, but not all, of the embodiments of the present disclosure. Based on the embodiments in the present disclosure, all other embodiments obtained by a person of ordinary skill in the art without making creative efforts fall within the protection scope of the present disclosure.

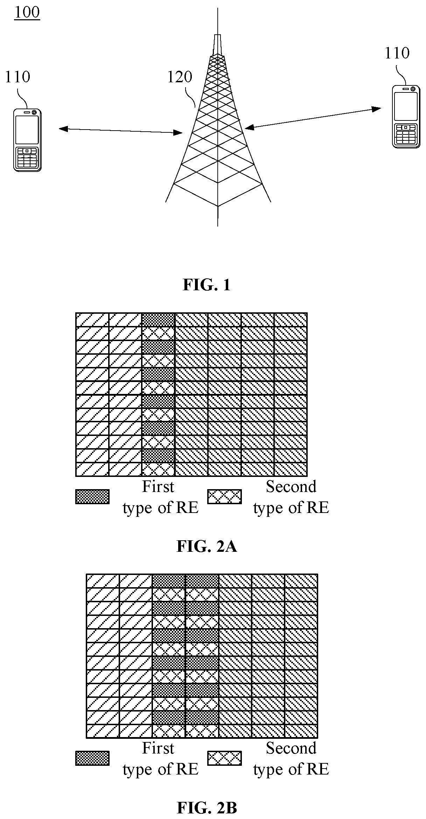

FIG. 1 is a schematic diagram of a communication architecture.

As shown in FIG. 1, a communication system 100 may include a terminal device 110 and a network device 120. The network device 120 may communicate with the terminal device 110 via an air interface. The terminal device 110 and the network device 120 support multi-service transmission.

It should be understood that the embodiments of the present disclosure are only illustrated by way of example using the communication system 100, but the embodiments of the present disclosure are not limited thereto. That is, the technical solutions of the embodiments of the present disclosure can be applied to various communication systems, for example: a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 shown in FIG. 1, the network device 120 may be an access network device that communicates with the terminal device 110. The access network device may provide communication coverage for a specific geographical area and may communicate with terminal devices 110 located within the coverage area.

The network device 120 may be an evolved Node B (eNB or eNodeB) in an LTE system, or a Next Generation Radio Access Network (NG RAN) device, or a base station (gNB) in an NR system, or a radio controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device, including but not limited to a terminal device connected to the network device 120 or other terminal devices via wired or wireless connection.

For example, the terminal device 110 may refer to an access terminal, User Equipment (UE), a subscriber unit, a subscriber station, a mobile station, a mobile, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with wireless communication capability, a computing device or other processing devices connected to a wireless modem, a vehicle-mounted device, a wearable device, a terminal device in a 5G network, or a terminal device in a future evolved network, etc.

The terminal device 110 may be used for Device to Device (D2D) communication.

FIG. 1 exemplarily shows one network device and two terminal devices. It should be understood that the communication system 100 may include multiple network devices and the coverage of each network device may include other numbers of terminal devices, which is not limited in the embodiments of the present disclosure.

It should be noted that FIG. 1 is only an example to illustrate the system to which the present disclosure is applicable. Of course, the methods shown in the embodiments of the present disclosure may also be applicable to other systems. Furthermore, the terms "system" and "network" are often used interchangeably herein.

It should be understood that the term "and/or" herein describes only an association relationship for describing associated objects, indicating that three relationships may exist. For example, A and/or B may indicate: A alone exists, A and B exist simultaneously, and B alone exists. In addition, the character "/" herein generally indicates that the associated objects are in an "or" relationship.

It should also be understood that "indication" mentioned in the embodiments of the present disclosure may be direct indication, indirect indication, or indication of an association relationship. For example, A indicating B may mean that A directly indicates B, e.g., B can be obtained through A; it may also mean that A indirectly indicates B, e.g., A indicates C, and B can be obtained through C; it may also mean that there is an association relationship between A and B.

It should also be understood that "correspondence" mentioned in the embodiments of the present disclosure may mean a direct or indirect correspondence between the two, or an association relationship between the two, or a relationship such as indicating and being indicated, configuring and being configured, etc.

It should also be understood that "predefined" or "predefined rules" or "pre-defined" mentioned in the embodiments of the present disclosure may be implemented by pre-storing corresponding codes, tables, or other means usable for indicating related information in devices (e.g., including terminal devices and network devices). The present disclosure does not limit the specific implementation manner thereof. For example, predefined may refer to being defined in a protocol. It should also be understood that in the embodiments of the present disclosure, the "protocol" may refer to a standard protocol in the communication field, for example, may include an LTE protocol, an NR protocol, and related protocols applied in future communication systems, which is not limited in the present disclosure.

It should also be understood that the term "at least one" may refer to one or more (two or more). For example, at least one device may refer to one or two or more devices.

To facilitate understanding of the technical solutions of the embodiments of the present disclosure, the related art of the embodiments of the present disclosure is described below. The following related art, as optional solutions, can be arbitrarily combined with the technical solutions of the embodiments of the present disclosure, and all fall within the protection scope of the embodiments of the present disclosure.

In the related art, the basic working process of a wireless communication system may include the following steps.

At a transmitting end, a bit stream of information to be transmitted undergoes channel coding to obtain encoded bit information; the encoded bit information is modulated to obtain modulation symbols; the modulation symbols and demodulation reference signals (DMRS) are inserted into corresponding time-frequency resources, and after subsequent processing, Orthogonal Frequency Division Multiplexing (OFDM) symbols, or Single-Carrier-Frequency Division Multiple Access (SC-FDMA) symbols, or other forms of multi-carrier symbols can be obtained.

It should be understood that the above process is described by taking OFDM and SC-FDMA systems as examples, and may also be applicable to other systems, which is not limited in the embodiments of the present disclosure.

Exemplarily, in the process of modulating the encoded bits to obtain modulation symbols, one or more of the following may be used: Binary Phase Shift Keying (BPSK), Quadrature Phase Shift Keying (QPSK), 16 Quadrature Amplitude Modulation (QAM), 64QAM, 256QAM, 512QAM, 1024QAM, 2048QAM, or 4096QAM.

Exemplarily, the modulation symbols and DMRS signals are inserted into corresponding Resource Elements (REs).

At a receiving end, a receiver performs channel estimation by measuring the DMRS signal, demodulates the modulation symbols, and performs channel decoding to obtain the bit information transmitted by the transmitting end.

It should be understood that the above steps can be combined and iterated, and do not necessarily strictly follow the above order. For example, information obtained through decoding can be used for channel estimation, and/or for modulation symbol demodulation.

It should be noted that the basic working process of the wireless communication system is similar whether it is for Downlink Transmission (DL Transmission), Uplink Transmission (UL Transmission), or Sidelink Transmission (SL Transmission).

Exemplarily, downlink transmission may be transmission from a network device to a terminal device, uplink transmission may be transmission from a terminal device to a network device, and sidelink transmission may be transmission between terminal devices.

It should also be noted that, to obtain the bit information transmitted by the transmitting end, the receiving end needs to use the DMRS signal.

Due to the complexity and time-varying nature of the wireless channel environment, the receiver's estimation and recovery of the wireless channel directly affect the final data recovery performance. In traditional communication systems, for a control channel (i.e., a channel transmitting control information), the DMRS signal is relatively fixed, meaning that the density and/or pattern of the DMRS signal does not need to change dynamically. In this case, the design of the DMRS signal tends to be conservative to adapt to various wireless channel environments. In wireless communication systems, for a data channel (i.e., a channel transmitting data), different DMRS signal densities and/or patterns are often designed to reduce the overhead of the DMRS signal, so that the DMRS signal can be configured or indicated according to the current wireless channel environment.

The following briefly introduces the data DMRS signal in the NR communication system as an example.

In the NR communication system, the DMRS signal can be divided into a front-loaded DMRS signal (which may be referred to as Front-Loaded DMRS) and a rear DMRS signal (which may be referred to as an additional DMRS signal (Additional DMRS)).

Exemplarily, for a high-speed UE, to improve channel estimation performance, some DMRS signals are added based on the front-loaded DMRS signal. For example, a high-speed UE may send an additional DMRS signal at a certain position in the latter part of the allocated time domain resources, thereby obtaining a rear DMRS signal.

It should be noted that the front-loaded DMRS signal is usually located in the first few OFDM symbols of a slot, and the pattern of the rear DMRS signal is a repetition of the front-loaded DMRS signal (e.g., using the same frequency domain resources, or using the same number of OFDM symbols) to ensure performance in high-speed scenarios. The front-loaded DMRS signal may include 1 or 2 OFDM symbols, configured by the network device.

It should also be noted that NR may support two different DMRS signal types, type 1 and type 2, and the resource occupation modes of different types of DMRS signals are different. The following takes a small grid representing 1 RE, 12 subcarriers in frequency domain as 1 Resource Block (RB), and 7 symbols in time domain as an example, and describes the two different DMRS signal types with reference to FIGS. 2A to 3B.

As shown in FIG. 2A and FIG. 2B, on one symbol (e.g., OFDM symbol) in each Physical Resource Block (PRB), two Code Division Multiplexing (CDM) groups can be supported, each CDM group including 6 subcarriers; wherein a first CDM group is carried by a first type of REs, and a second CDM group is carried by a second type of REs. Each CDM group can support two ports, and the two ports are kept orthogonal by Orthogonal Cover Code (OCC), that is, the OCC code used by one port is [+1 +1 +1 +1 +1 +1], and the OCC code used by the other port is [+1 -1 +1 -1 +1 -1].

Exemplarily, as shown in FIG. 2A, at most 4 orthogonal ports can be supported on one symbol.

Exemplarily, as shown in FIG. 2B, at most 8 orthogonal ports can be supported on two symbols, and Time Domain Orthogonal Cover Code (TD-OCC) can be used between the two symbols. For example, the first CDM group of the first symbol includes ports {1000, 1001}, and the second CDM group of the first symbol includes ports {1002, 1003}; the first CDM group of the second symbol includes ports {1004, 1005}, and the second CDM group of the second symbol includes ports {1006, 1007}.

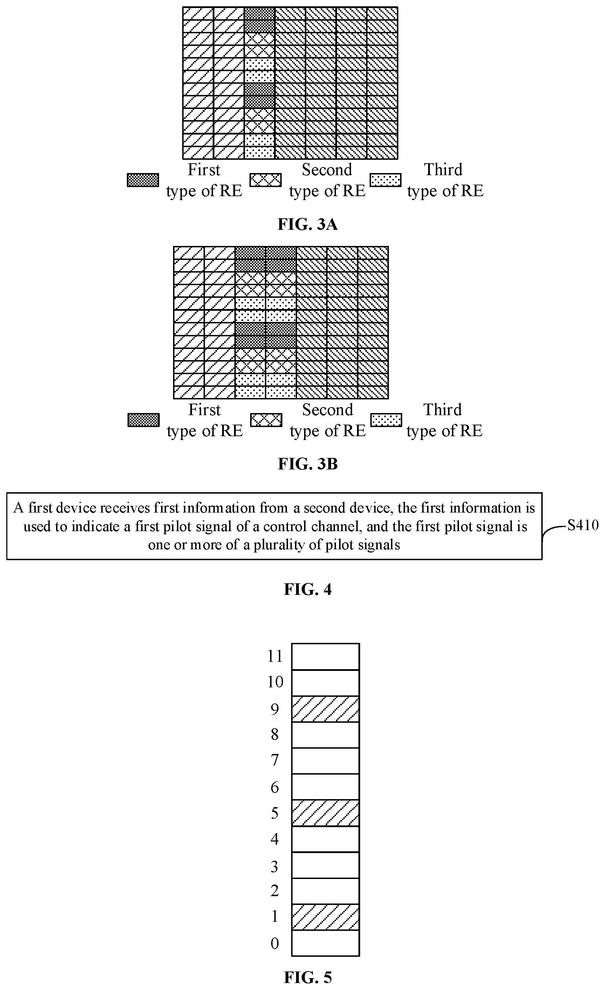

As shown in FIG. 3A and FIG. 3B, on one symbol in each PRB, 3 CDM groups can be supported, each CDM group including 4 adjacent subcarriers; wherein a first CDM group is carried by a first type of REs, a second CDM group is carried by a second type of REs, and a third CDM group is carried by a third type of REs. Each CDM group can support two ports, and the two ports are kept orthogonal by OCC, that is, the OCC code used by one port is [+1 +1 +1 +1], and the OCC code used by the other port is [+1 -1 +1 -1].

Exemplarily, as shown in FIG. 3A, at most 6 orthogonal ports can be supported on one symbol.

Exemplarily, as shown in FIG. 3B, at most 12 orthogonal ports can be supported on two symbols, and TD-OCC is used between the two symbols. For example, the first CDM group of the first symbol includes ports {1000, 1001}, the second CDM group of the first symbol includes ports {1002, 1003}, and the third CDM group of the first symbol includes ports {1004, 1005}; the first CDM group of the second symbol includes ports {1006, 1007}, the second CDM group of the second symbol includes ports {1008, 1009}, and the third CDM group of the second symbol includes ports {1010, 1011}.

The network device side indicates the transmission of the Physical Downlink Control Channel (PDCCH) by configuring a Control Resource Set (CORESET) and a Search Space.

It should be noted that the CORESET may include multiple PRBs in the frequency domain and 1 to 3 OFDM symbols in the time domain. The time domain resources occupied by the CORESET may be semi-statically configured by higher layer parameters.

It should also be noted that a search space is a set of PDCCH candidates under one or more aggregation levels. A search space may also be referred to as a search space set, and search space and search space set refer to the same concept in the protocol.

It should also be noted that a terminal device may decode PDCCH candidates within a search space. If the Cyclic Redundancy Check (CRC) passes, it can be considered that the decoded PDCCH candidate is valid for the terminal device, and the decoded PDCCH candidate can be used for subsequent operations.

Further, the aggregation level of the PDCCH actually sent by the network device may change over time. Since there is no relevant signaling to inform the terminal device, the terminal device needs to blindly detect the PDCCH at different aggregation levels; wherein the PDCCH to be blindly detected may be referred to as a PDCCH candidate.

In the NR communication system, a Resource-Element Group (REG) may consist of 12 subcarriers on one symbol, and 6 REGs may form one Control Channel Element (CCE). One PDCCH Candidate may use one or more CCEs in one CORESET, reflecting the aggregation level. Aggregation levels may include 1, 2, 4, 8, 16, corresponding to 1, 2, 4, 8, 16 CCEs, respectively.

In each downlink Bandwidth Part (BWP) of each serving cell, the network device side may configure up to 10 search spaces for the terminal device. The search space is configured with time domain configuration information, which may be used to indicate the time domain position for the terminal device to detect the PDCCH. At the same time, the network device side configures a CORESET ID associated with the search space for each search space. Through the CORESET ID, the terminal device can obtain the physical resources of the search space in the frequency domain. Each search space has a uniquely associated CORESET ID, and different search spaces may be associated with the same CORESET ID. The terminal device can determine the time-frequency domain position of the PDCCH candidate based on the time domain given by the search space, the frequency domain of the CORESET ID associated with the search space, and other parameters in the search space.

When configuring a CORESET, the network device may configure one or a set of Transmission Configuration Indicator States (TCI States) for each CORESET. The TCI State may be used to indicate relevant parameters required for the terminal device to perform demodulation and detection on the PDCCH candidate in the search space associated with the CORESET. When the network device configures a set of TCI States for a certain CORESET, the network device activates one TCI State for the CORESET through Media Access Control Element (MAC CE) signaling, so that the activated TCI State can be used to assist the terminal device in demodulating the PDCCH.

In addition, the network device may also configure a Higher Layer Index (i.e., CORESET Pool Index) for each CORESET to indicate grouping. The value range of the higher layer index is 0 and 1. The higher layer index may implicitly indicate whether it is the same Transmission Reception Point (TRP). For example, for CORESETs configured with the same higher layer index, the terminal device may consider that they are data from the same TRP.

It should be noted that it can be obtained from the protocol whether each CORESET is associated with a higher layer index, but the physical entity of the TRP cannot be reflected in the protocol.

In the embodiments of the present disclosure, RE, RB, and symbol are mentioned multiple times. RE, RB, and symbol are briefly described below.

RE: The smallest time-frequency resource unit in a wireless communication system. For example, in an NR or LTE system, the frequency domain of one RE corresponds to one subcarrier, and the time domain of one RE corresponds to one symbol.

RB: It may be for K consecutive subcarriers in the frequency domain. In addition, in some systems, RB may also be for K consecutive subcarriers in the frequency domain and M consecutive symbols in the time domain.

Exemplarily, the value of K may be one or more of 8, 12, 16, or other values, which is not limited in the embodiments of the present disclosure.

Exemplarily, the value of M may be one or more of 6, 7, 13, 14, or other values, which is not limited in the embodiments of the present disclosure.

It should be noted that in the embodiments of the present disclosure, no distinction is made between RB and PRB, and RB and PRB in the embodiments of the present disclosure are collectively referred to as PRB.

Symbol: The symbol in the embodiments of the present disclosure may be an OFDM symbol, an SC-FDMA symbol, or other forms of multi-carrier symbols, which is not limited in the embodiments of the present disclosure.

It should be noted that an SC-FDMA symbol may also be referred to as a Discrete Fourier Transform-Spread Orthogonal Frequency Division Multiplexing (DFT-SOFDM) symbol, or an SC-FDMA symbol may also be referred to as a multi-carrier symbol using a Transform Precoder, or SC-FDMA may also be referred to as an OFDM symbol using a Transform Precoder.

In the related art, for some specific terminal devices, the pilot signal of a control channel is generally pre-defined, resulting in poor flexibility of the pilot signal. For example, according to the actual wireless environment in which a terminal device is located, it may need a pilot signal with higher density (or lower density) to achieve good performance.

Based on this, embodiments of the present disclosure provide a communication method. A first device can receive first information from a second device, where the first information is used to indicate a first pilot signal of a control channel, and the first pilot signal is one or more of a plurality of pilot signals. In this way, by indicating the first pilot signal of the control channel through the first information, the flexibility of the first pilot signal can be improved; after receiving the first information, the first device can obtain the first pilot signal matching its actual wireless environment, thereby achieving good performance.

To facilitate understanding of the technical solutions of the embodiments of the present disclosure, the technical solutions of the present disclosure are described in detail below through specific embodiments. The above related art, as optional solutions, can be arbitrarily combined with the technical solutions of the embodiments of the present disclosure, and all fall within the protection scope of the embodiments of the present disclosure. The embodiments of the present disclosure include at least part of the following content.

FIG. 4 is a schematic flowchart of a communication method provided by an embodiment of the present disclosure. As shown in FIG. 4, the method may include the following step.

S410: A first device receives first information from a second device, where the first information is used to indicate a first pilot signal of a control channel, and the first pilot signal is one or more of a plurality of pilot signals.

Correspondingly, the second device may send the first information to the first device.

It should be noted that in the embodiments of the present disclosure, the first device may be a first terminal device; the second device may be a second terminal device or a network device, which is not limited in the embodiments of the present disclosure.

Exemplarily, in the embodiments of the present disclosure, a typical example of a pilot signal is a DMRS signal. The pilot signal may also be a Channel State Information Reference Signal (CSI-RS), a Phase Tracking Reference Signal (PT-RS), etc., which is not limited in the embodiments of the present disclosure.

In some embodiments, the first pilot signal may be related to one or more of:
a pilot signal type supported by the first device;
a speed of the first device; or
a wireless channel environment between the first device and the second device.

It should be noted that the first pilot signal may be related to the pilot signal type supported by the first device, which can be understood as that the first pilot signal may be determined based on the pilot signal type supported by the first device. That is, the first device may select a matching first pilot signal from a plurality of pre-defined pilot signals according to the supported pilot signal type; or the second device may indicate the first pilot signal from a plurality of pre-defined pilot signals according to the pilot signal type supported by the first device.

Further, according to whether the time-frequency resources occupied by the pilot signal are used for transmitting control information of the control channel, the pilot signal types can be divided into two categories, wherein: the time-frequency resources occupied by the first type of pilot signal are not used for transmitting control information of the control channel, and at least part of the time-frequency resources occupied by the second type of pilot signal can be used for transmitting control information of the control channel. The first pilot signal may be the first type of pilot signal or the second type of pilot signal.

It should be noted that the first pilot signal may be related to the speed of the first device, which can be understood as that the first pilot signal may be determined based on the speed of the first device. That is, the first device may select a matching first pilot signal from a plurality of pre-defined pilot signals according to the speed of the first device; or the second device may indicate the first pilot signal from a plurality of pre-defined pilot signals according to the speed of the first device.

It should also be noted that the first pilot signal may be related to the wireless channel environment between the first device and the second device, which can be understood as that the first pilot signal may be determined based on the wireless channel environment between the first device and the second device. That is, the first device may select a matching first pilot signal from a plurality of pre-defined pilot signals according to the wireless channel environment between the first device and the second device; or the second device may indicate the first pilot signal from a plurality of pre-defined pilot signals according to the wireless channel environment between the first device and the second device.

Through this method, the first pilot signal of the control channel can be indicated by the first information, thereby improving the flexibility of the first pilot signal, better matching the wireless environment, and improving system performance.

In some embodiments, the first information may be carried by one or more of:
a broadcast message;
a system message;
Radio Resource Control (RRC) signaling;
Media Access Control Element (MAC CE) signaling;
Downlink Control Information (DCI);
a random access message; or
dedicated signaling.

Exemplarily, the broadcast message may be a Master Information Block (MIB) message.

Exemplarily, the system message may be System Information Block Type1 (SIB1), System Information Block (SIB), etc., which is not limited in the embodiments of the present disclosure.

Exemplarily, the random access message may be a downlink message in a random access procedure, for example, the random access message may be Message (Msg) B, Msg2, Msg4, etc., which is not limited in the embodiments of the present disclosure.

Exemplarily, the dedicated signaling may be Artificial Intelligence (AI)/Machine Learning (ML) dedicated signaling, etc., which is not limited in the embodiments of the present disclosure.

It should be noted that the first information may be carried by the same type of signaling. For example, the first information may be carried by one RRC signaling; for another example, the first information may be carried by one MAC CE signaling.

Further, the first information may be carried by multiple pieces of the same type of signaling. For example, assuming the multiple pieces of the same type of signaling are two MAC CE signalings, part of the information in the first information may be carried by one MAC CE signaling, and another part of the information may be carried by another MAC CE signaling; for another example, assuming the multiple pieces of the same type of signaling are two DCI signalings, part of the information in the first information may be carried by one DCI, and another part of the information may be carried by another DCI; for another example, assuming the multiple pieces of the same type of signaling are two RRC signalings, part of the information in the first information may be carried by one RRC signaling, and another part of the information may be carried by another RRC signaling.

It should be noted that the first information may be carried by different types of signaling.

Exemplarily, the first information may be carried by a broadcast message and RRC signaling. For example, part of the information in the first information may be carried by a broadcast message, and another part of the information may be carried by RRC signaling.

Exemplarily, the first information may be carried by a system message and a random access message. For another example, part of the information in the first information may be carried by a system message, and another part of the information may be carried by a random access message.

It should be noted that, in the case where the first information is carried by a broadcast message, the first information can notify all terminal devices (such as the first terminal device, and also other terminal devices), thereby reducing the total signaling overhead.

It should also be noted that, in the case where the first information is carried by a system message, the first information can notify all terminal devices (such as the first terminal device, and also other terminal devices), thereby reducing the total signaling overhead.

It should also be noted that, in the case where the first information is carried by RRC signaling, each terminal device (such as the first terminal device, and also other terminal devices) can be configured individually, thereby improving the performance of each terminal device in a more targeted manner, and having good reliability.

It should also be noted that, in the case where the first information is carried by MAC CE signaling, each terminal device (such as the first terminal device, and also other terminal devices) can be configured individually, thereby improving the performance of each terminal device in a more targeted manner, and having good reliability and lower latency.

It should also be noted that, in the case where the first information is carried by DCI, each terminal device (such as the first terminal device, and also other terminal devices) can be configured individually, thereby improving the performance of each terminal device in a more targeted manner, and having lower latency.

It should also be noted that, in the case where the first information is carried by a random access message, the random access message can be pre-configured, thereby improving system performance.

It should also be noted that, in the case where the first information is carried by dedicated signaling, transmission efficiency can be improved.

In some embodiments, the control channel may include a downlink control channel and/or a sidelink control channel.

Exemplarily, the downlink control channel may be PDCCH.

Exemplarily, the sidelink control channel may be PSCCH.

It should be noted that, in the case where the first information is sent by a network device, the control channel may be a downlink control channel.

It should also be noted that, in the case where the first information is sent by a second terminal device, the control channel may be a sidelink control channel.

In some embodiments, the first information may indicate for one or more of:
a cell;
a carrier;
a bandwidth part;
a Physical Sidelink Control Channel (PSCCH);
a control resource set;
a control resource set group; or
a search space.

It should be noted that, in the case where the first information indicates for one cell, the first information may be information in configuration information of a control channel in one cell, thereby reducing signaling overhead.

It should also be noted that, in the case where the first information indicates for one carrier, the first information may be information in configuration information of a control channel in one carrier, thereby reducing signaling overhead.

It should also be noted that, in the case where the first information indicates for one bandwidth part, the first information may be information in configuration information of a control channel in one bandwidth part, thereby reducing signaling overhead.

It should also be noted that, in the case where the first information indicates for one PSCCH, the first information may be information in configuration information of one PSCCH channel, thereby reducing signaling overhead.

It should also be noted that, in the case where the first information indicates for one control resource set, the first information may be information in configuration information of one control resource set, or the first information may indicate the corresponding control resource set, thereby allowing more flexible control of each control resource set, providing greater freedom for network optimization.

It should also be noted that, in the case where the first information indicates for one control resource set group, the first information may be information in configuration information of one control resource set group, or the first information may indicate the corresponding control resource set group, thereby allowing more flexible control of each control resource set group, providing greater freedom for network optimization.

Further, in the NR communication system, one control resource set group may be referred to as a CORESET pool.

It should also be noted that, in the case where the first information indicates for one search space, the first information may be information in configuration information of one search space, or the first information may indicate the corresponding search space, thereby allowing more flexible control of each search space set, providing greater freedom for network optimization.

Through this method, by indicating for one or more of the above objects, the first information can achieve different configuration granularities, thereby meeting different flexibility requirements.

In some embodiments, the plurality of pilot signals may have different configurations in one or more of:
power parameter;
time domain position of occupied time-frequency resources;
frequency domain position of occupied time-frequency resources;
sequence generation method; or
sequence generation parameter.

In some embodiments, the time-frequency resources occupied by the first pilot signal are not used for transmitting control information of the control channel.

It should be noted that the time-frequency resources occupied by the first pilot signal are not used for transmitting control information of the control channel can be understood as that the first pilot signal and the control information occupy different time-frequency resources, the first pilot signal and the control information are placed orthogonally on the time-frequency resources, and there is no overlap between the first pilot signal and the control information on the time-frequency resources. That is, on one time-frequency resource, either the first pilot signal or the control information can be placed, but the first pilot signal and the control information cannot be placed simultaneously. For simplicity of description, the first pilot signal in this scenario can be referred to as an orthogonal pilot signal.

Exemplarily, in the NR communication system, taking PDCCH as an example, one RE out of every 4 REs is used for transmitting the first pilot signal, and the other 3 REs are used for transmitting control information of the PDCCH.

For example, as shown in FIG. 5, assuming there are 12 REs (corresponding to 12 subcarriers) within one RB, the time-frequency resources occupied by the first pilot signal are on the 1st, 5th, and 9th subcarriers within the RB, and the time-frequency resources occupied by the control information of the PDCCH are on other subcarriers.

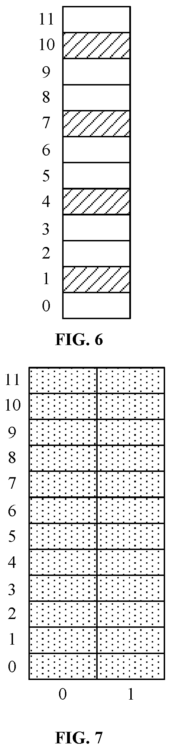

For example, as shown in FIG. 6, assuming there are 12 REs (corresponding to 12 subcarriers) within one RB, the time-frequency resources occupied by the first pilot signal are on the 1st, 4th, 7th, and 10th subcarriers within the RB, and the time-frequency resources occupied by the control information of the PDCCH are on other subcarriers.

Through this method, in the case where the time-frequency resources occupied by the first pilot signal are not used for transmitting control information of the control channel, the first pilot signal used by the first device is the orthogonal pilot signal in the related art, thereby avoiding introducing a new pilot signal and reducing system complexity; wherein the new pilot signal may be a non-orthogonal pilot signal (i.e., one or more REs are used simultaneously for the pilot signal and control information).

However, when the total time-frequency resources are fixed, if the moving speed of the terminal device is high, to improve channel estimation performance, the first pilot signal often needs to occupy more time-frequency resources, resulting in a reduction of time-frequency resources occupied by control information, thereby reducing the transmission rate and transmission reliability of the control information.

Based on this, in other embodiments, at least part of the time-frequency resources occupied by the first pilot signal are used for transmitting control information of the control channel. For simplicity of description, the first pilot signal in this scenario can be referred to as a non-orthogonal pilot signal.

It should be noted that the at least part of the time-frequency resources may be one time-frequency resource occupied by the first pilot signal, or multiple time-frequency resources (not all time-frequency resources) occupied by the first pilot signal, or all time-frequency resources occupied by the first pilot signal, which is not limited in the embodiments of the present disclosure.

It should also be noted that at least part of the time-frequency resources occupied by the first pilot signal are used for transmitting control information can be understood as that one or more or all of the time-frequency resources occupied by the first pilot signal are also time-frequency resources occupied by the control information, and on this one or more or all time-frequency resources, the first pilot signal and the control information exist simultaneously, i.e., one or more or all of the time-frequency resources occupied by the first pilot signal are also used for control information transmission. For simplicity of description, the at least part of the time-frequency resources may be referred to as shared time-frequency resources.

It should also be noted that at least part of the time-frequency resources occupied by the first pilot signal are used for transmitting control information can be understood as that at least part of the time-frequency resources occupied by the control information are used for transmitting the first pilot signal.

Exemplarily, as shown in FIG. 7, taking 2 symbols in the time domain and 12 subcarriers in the frequency domain (corresponding to 24 REs) as an example, all REs in FIG. 7 are used for transmitting the first pilot signal and control information.

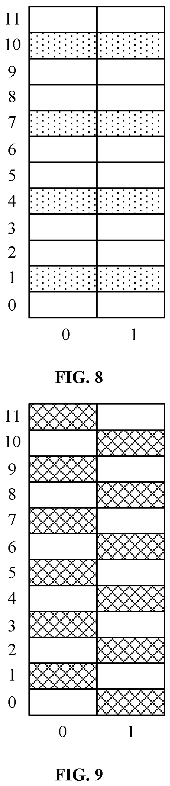

Exemplarily, as shown in FIG. 8, taking 2 symbols in the time domain and 12 subcarriers in the frequency domain (corresponding to 24 REs) as an example, REs corresponding to the 1st, 4th, 7th, and 10th subcarriers on the 0th symbol may be used for transmission of the first pilot signal and control information, and REs corresponding to the 1st, 4th, 7th, and 10th subcarriers on the 1st symbol may also be used for transmission of the first pilot signal and control information, and other REs may be used for transmission of control information.

Exemplarily, as shown in FIG. 9, taking 2 symbols in the time domain and 12 subcarriers in the frequency domain (corresponding to 24 REs) as an example, REs corresponding to the 1st, 3rd, 5th, 7th, 9th, and 11th subcarriers on the 0th symbol may be used for transmission of the first pilot signal and control information, and REs corresponding to the 0th, 2nd, 4th, 6th, 8th, and 10th subcarriers on the 1st symbol may also be used for transmission of the first pilot signal and control information, and other REs may be used for transmission of control information. It should be understood that in the embodiments of the present disclosure, an RE may be used for transmission of the first pilot signal and a data signal, that is, the RE occupied by the first pilot signal may also be used for transmission of the data signal.

Through this method, at least part of the time-frequency resources occupied by the first pilot signal can also be occupied by control information, thereby increasing the time-frequency resources occupied by control information, and improving the transmission rate and transmission reliability of the control information.

It should be noted that in a Code Division Multiple Access (CDMA) system, although the pilot signal and control information can be transmitted on the same time-frequency resources, both the pilot signal and control information need to undergo additional spreading processing, for example, the pilot signal and control information need to use different orthogonal codes for distinction. However, the embodiments of the present disclosure are mainly applied to OFDM systems/SC-FDMA systems, and other systems based on multiple subcarriers. Modulation symbols of control information (such as QPSK, or 16QAM) and modulation symbols of demodulation pilot signals can be directly transmitted on the same time-frequency resources, and the pilot signal and control information do not need to undergo additional spreading processing.

In the embodiments of the present disclosure, the first information may indicate the first pilot signal from a plurality of pilot signals through an information field. When the first information indicates the first pilot signal through an information field, there may be the following two possible implementation manners.

A possible implementation manner is that the first information includes a first information field, and a value of the first information field indicates the first pilot signal.

Exemplarily, different values of the information field may be used to indicate the pilot signal. For example, when the first information field takes a fourth value, the first information field indicates the first pilot signal; for another example, taking the first information field occupying 2 bits as an example, when the value of the first information field is "01", the first information field indicates the first pilot signal.

Through this method, when the pilot signal is indicated by the value of the information field, different values of multiple information fields can indicate different pilot signals, thus providing better flexibility.

Another possible implementation manner is that the first information includes a second information field, and the second information field indicates the first pilot signal when configured; or the second information field indicates the first pilot signal when not configured.

It should be noted that when the second information field indicates the first pilot signal when not configured, the first pilot signal may be considered as a default pilot signal. In this case, the first pilot signal may be determined according to one or more of pre-defined rules (e.g., protocol specification), network broadcast information, system information, thereby saving signaling overhead.

It should also be noted that when the second information field is configured, its value may be "Enabled" or "Support", or variations thereof (e.g., Enable, Supported, and other related forms), thereby being able to flexibly indicate the first pilot signal, providing optimization space for the system.

Another possible implementation manner is that the first information may indicate the first pilot signal by configuring different information fields based on a CHOICE structure.

Exemplarily, taking two information fields and two pilot signals as an example, assume the first information includes a third information field and a fourth information field. The third information field, when configured, may indicate one of the pilot signals as the first pilot signal, or the fourth information field, when configured, may indicate the other pilot signal as the first pilot signal.

Through this method, the flexibility of indicating the first pilot signal can be improved, providing optimization space for the system.

In the embodiments of the present disclosure, the first device needs to know relevant parameters of the first pilot signal.

On one hand, in the case where the time-frequency resources occupied by the first pilot signal are not used for transmitting control information of the control channel, if the first device cannot obtain the relevant parameters of the first pilot signal, it cannot perform corresponding processing based on the relevant parameters of the first pilot signal, thereby reducing system performance.

On the other hand, in the case where at least part of the time-frequency resources occupied by the first pilot signal are used for transmitting control information of the control channel, a receiver can be used to demodulate the control information.

Exemplarily, the receiver may be an iterative receiver, an AI/ML receiver, etc., which is not limited in the embodiments of the present disclosure.

It should be noted that the receiver may use various algorithms such as Deep Learning. Exemplarily, the receiver may use one or a combination of Fully Convolutional Networks (FCN), Convolutional Neural Network (CNN), Recurrent Neural Network (RNN), Transformer neural network architectures.

It should be understood that the premise of using a receiver to demodulate the control information is that the first device needs to know the relevant parameters of the first pilot signal; otherwise, it will lead to mismatch between the receiver and the actually received control information, resulting in performance degradation.

Based on this, in the embodiments of the present disclosure, the relevant parameters of the first pilot signal may be indicated by the first information; or the relevant parameters of the first pilot signal may be pre-defined. Additionally, the first information may indicate some relevant parameters of the first pilot signal, while other relevant parameters of the first pilot signal are pre-defined. In the subsequent description, descriptions involving relevant parameters generally also apply to some relevant parameters.

That is, in some embodiments, the first information may indicate one or more of the following parameters of the first pilot signal; or one or more of the following parameters of the first pilot signal are pre-defined:
power parameter;
frequency domain position of occupied time-frequency resources;
time domain position of occupied time-frequency resources;
sequence generation method; or
sequence generation parameter.

It should be noted that the relevant parameters of the first pilot signal being pre-defined may include: the relevant parameters of the first pilot signal may be pre-defined by a protocol; or the relevant parameters of the first pilot signal may be pre-defined by network broadcast information.

Further, the relevant parameters of the first pilot signal may also be pre-defined in other ways.

It should be noted that, in the case where the time-frequency resources occupied by the first pilot signal are not used for transmitting control information of the control channel, after obtaining the relevant parameters of the first pilot signal, the first device can perform corresponding processing based on the relevant parameters of the first pilot signal, thereby improving system performance.

It should also be noted that, in the case where at least part of the time-frequency resources occupied by the first pilot signal are used for transmitting control information of the control channel, after obtaining the relevant parameters of the first pilot signal, the first device can improve the adaptation between the receiver and the actually received control information, so that the receiver can be used to demodulate the control information.

In the following embodiments, the relevant parameters of the first pilot signal are described in detail.

### (I) Power parameter of the first pilot signal.

It should be noted that "power" mentioned in the embodiments of the present disclosure may also be directly extended to "energy".

Through this method, when the power parameter of the first pilot signal is indicated by the first information, the first information can flexibly indicate the power allocation of the first pilot signal, enabling the system to optimize the transmission power of the first pilot signal according to the wireless environment, improving system performance; when the power parameter of the first pilot signal is pre-defined, signaling overhead can be saved.

In some embodiments, in the case where at least part of the time-frequency resources occupied by the first pilot signal are used for transmitting control information of the control channel, the power parameter of the first pilot signal may include one or more of:
a ratio of power with which the first pilot signal is sent on a first time-frequency resource to total power on a second time-frequency resource;
a ratio of power with which the control information of the control channel is sent on the first time-frequency resource to the total power on the second time-frequency resource;
a ratio of the power with which the first pilot signal is sent on the first time-frequency resource to the power with which the control information of the control channel is sent on the first time-frequency resource; or
a ratio of the power with which the control information of the control channel is sent on the first time-frequency resource to the power with which the first pilot signal is sent on the first time-frequency resource.

Based on this, in the case where at least part of the time-frequency resources occupied by the first pilot signal are used for transmitting control information of the control channel, the power parameter of the first pilot signal may have the following several possible implementation manners.

A possible implementation manner is that the power parameter of the first pilot signal may be a ratio of power with which the first pilot signal is sent on a first time-frequency resource to total power on a second time-frequency resource.

Here, the first time-frequency resource is any one of the at least part of the time-frequency resources.

It should be noted that, when the first time-frequency resource is any one of the at least part of the time-frequency resources, the first time-frequency resource can be considered as a shared time-frequency resource.

It should also be noted that the total power on the second time-frequency resource may be the sum of power with which the first pilot signal is sent on the second time-frequency resource and power with which the control information of the control channel is sent on the second time-frequency resource.

It should also be noted that the second time-frequency resource may be any one of the at least part of the time-frequency resources, in which case the second time-frequency resource can be considered as a shared time-frequency resource; the second time-frequency resource may not be any one of the at least part of the time-frequency resources, or in other words, the second time-frequency resource may be any one of other time-frequency resources except the at least part of the time-frequency resources, in which case the second time-frequency resource can be considered as not a shared time-frequency resource.

In some embodiments, the second time-frequency resource may be any one of the at least part of the time-frequency resources.

Further, when the second time-frequency resource is any one of the at least part of the time-frequency resources, the second time-frequency resource and the first time-frequency resource may be the same time-frequency resource or different time-frequency resources, which is not limited in the embodiments of the present disclosure.

In other embodiments, the second time-frequency resource may be any one of other time-frequency resources except the at least part of the time-frequency resources.

Exemplarily, when the ratio is a linear value, candidate values for the ratio may be one or more of the following values: {0.01, 0.02, 0.03, 0.04, 0.05, 0.06, 0.07, 0.08, 0.09, 0.10, 0.15, 0.20, 0.25, 0.3, 0.35, 0.4, 0.45, 0.5, 0.55, 0.6, 0.65, 0.7, 0.75, 0.8, 0.85, 0.9}.

Exemplarily, when the ratio is a dB value, candidate values for the ratio may be one or more of the following values: {-1dB, -2dB, -3dB, -4dB, -5dB, -6dB, -7dB, -8dB, -9dB, -10dB, -11dB, -12dB, -13dB, -14dB, -15dB, -16dB, -17dB, -18dB, -19dB, -20dB}.

It should be noted that the power parameter of the first pilot signal may also be a ratio of the total power on the second time-frequency resource to the power with which the first pilot signal is sent on the first time-frequency resource.

Further, regarding the power parameter of the first pilot signal being the ratio of the total power on the second time-frequency resource to the power with which the first pilot signal is sent on the first time-frequency resource, and the power parameter of the first pilot signal being the ratio of the power with which the first pilot signal is sent on the first time-frequency resource to the total power on the second time-frequency resource: when these two ratios are linear values, the candidate values of the two ratios are reciprocals of each other (e.g., a and 1/a); when these two ratios are dB values, the candidate values of the two ratios are opposites of each other (e.g., a and -a).

It should be noted that, when the ratio is a linear value and the power parameter of the first pilot signal is indicated by the first information, the indication of the first information can be simplified.

It should also be noted that, when the ratio is a dB value and the power parameter of the first pilot signal is indicated by the first information, the first information can indicate more subtle power differences.

Through this method, when the power parameter of the first pilot signal is indicated by the first information, the first information can directly indicate the proportion of total power (e.g., the first information indicates the ratio of the power with which the first pilot signal is sent on the first time-frequency resource to the total power on the second time-frequency resource), thereby simplifying the calculation of the power parameter of the first pilot signal; when the power parameter of the first pilot signal is pre-defined, signaling overhead can be saved.

Another possible implementation manner is that the power parameter of the first pilot signal may be a ratio of power with which the control information of the control channel is sent on a first time-frequency resource to total power on a second time-frequency resource.

Here, the first time-frequency resource is any one of the at least part of the time-frequency resources.

It should be noted that, when the first time-frequency resource is any one of the at least part of the time-frequency resources, the first time-frequency resource can be considered as a shared time-frequency resource.

It should also be noted that the total power on the second time-frequency resource may be the sum of power with which the first pilot signal is sent on the second time-frequency resource and power with which the control information of the control channel is sent on the second time-frequency resource.

It should also be noted that the second time-frequency resource may be any one of the at least part of the time-frequency resources, in which case the second time-frequency resource can be considered as a shared time-frequency resource; the second time-frequency resource may not be any one of the at least part of the time-frequency resources, or in other words, the second time-frequency resource may be any one of other time-frequency resources except the at least part of the time-frequency resources, in which case the second time-frequency resource can be considered as not a shared time-frequency resource.

In some embodiments, the second time-frequency resource may be any one of the at least part of the time-frequency resources.

Further, when the second time-frequency resource is any one of the at least part of the time-frequency resources, the second time-frequency resource and the first time-frequency resource may be the same time-frequency resource or different time-frequency resources, which is not limited in the embodiments of the present disclosure.

In other embodiments, the second time-frequency resource may be any one of other time-frequency resources except the at least part of the time-frequency resources.

It should also be noted that, when the ratio is a linear value or a dB value, candidate values for the ratio can be understood with reference to the description in the previous embodiments, and for brevity, details are not repeated here.

It should also be noted that the power parameter of the first pilot signal may also be a ratio of the total power on the second time-frequency resource to the power with which the control information of the control channel is sent on the first time-frequency resource.

Further, regarding the power parameter of the first pilot signal being the ratio of the total power on the second time-frequency resource to the power with which the control information of the control channel is sent on the first time-frequency resource, and the power parameter of the first pilot signal being the ratio of the power with which the control information of the control channel is sent on the first time-frequency resource to the total power on the second time-frequency resource: when these two ratios are linear values, the candidate values of the two ratios are reciprocals of each other; when these two ratios are dB values, the candidate values of the two ratios are opposites of each other.

It should be noted that, when the ratio is a linear value and the power parameter of the first pilot signal is indicated by the first information, the indication of the first information can be simplified.

It should also be noted that, when the ratio is a dB value and the power parameter of the first pilot signal is indicated by the first information, the first information can indicate more subtle power differences.

Through this method, when the power parameter of the first pilot signal is indicated by the first information, the first information can directly indicate the proportion of total power, thereby simplifying the calculation of the power parameter of the first pilot signal; when the power parameter of the first pilot signal is pre-defined, signaling overhead can be saved.

Another possible implementation manner is that the power parameter of the first pilot signal may be a ratio of the power with which the first pilot signal is sent on a first time-frequency resource to the power with which the control information of the control channel is sent on the first time-frequency resource.

Here, the first time-frequency resource is any one of the at least part of the time-frequency resources.

It should be noted that, when the first time-frequency resource is any one of the at least part of the time-frequency resources, the first time-frequency resource can be considered as a shared time-frequency resource.

It should also be noted that, when the ratio is a linear value or a dB value, candidate values for the ratio can be understood with reference to the description in the previous embodiments, and for brevity, details are not repeated here.

It should also be noted that, when the ratio is a linear value and the power parameter of the first pilot signal is indicated by the first information, the indication of the first information can be simplified.

It should also be noted that, when the ratio is a dB value and the power parameter of the first pilot signal is indicated by the first information, the first information can indicate more subtle power differences.

Through this method, when the power parameter of the first pilot signal is indicated by the first information, compared with the first information directly indicating the proportion of total power, the first information indicates the ratio of the power with which the first pilot signal is sent on the first time-frequency resource to the power with which the control information of the control channel is sent on the first time-frequency resource, which can make the dynamic value range of the power parameter of the first pilot signal smaller, thereby improving the granularity of indication and reducing the indication overhead; when the power parameter of the first pilot signal is pre-defined, signaling overhead can be saved.

Another possible implementation manner is that the power parameter of the first pilot signal may be a ratio of the power with which the control information of the control channel is sent on a first time-frequency resource to the power with which the first pilot signal is sent on the first time-frequency resource.

Here, the first time-frequency resource is any one of the at least part of the time-frequency resources.

It should be noted that, when the first time-frequency resource is any one of the at least part of the time-frequency resources, the first time-frequency resource can be considered as a shared time-frequency resource.

It should also be noted that, when the ratio is a linear value or a dB value, candidate values for the ratio can be understood with reference to the description in the previous embodiments, and for brevity, details are not repeated here.

It should also be noted that, regarding the power parameter of the first pilot signal being the ratio of the power with which the control information of the control channel is sent on the first time-frequency resource to the power with which the first pilot signal is sent on the first time-frequency resource, and the power parameter of the first pilot signal being the ratio of the power with which the first pilot signal is sent on the first time-frequency resource to the power with which the control information of the control channel is sent on the first time-frequency resource: when these two ratios are linear values, the candidate values of the two ratios are reciprocals of each other; when these two ratios are dB values, the candidate values of the two ratios are opposites of each other.

It should also be noted that, when the ratio is a linear value and the power parameter of the first pilot signal is indicated by the first information, the indication of the first information can be simplified.

It should also be noted that, when the ratio is a dB value and the power parameter of the first pilot signal is indicated by the first information, the first information can indicate more subtle power differences.

Through this method, when the power parameter of the first pilot signal is indicated by the first information, compared with the first information directly indicating the proportion of total power, the first information indicates the ratio of the power with which the control information of the control channel is sent on the first time-frequency resource to the power with which the first pilot signal is sent on the first time-frequency resource, which can make the dynamic value range of the power parameter of the first pilot signal smaller, thereby improving the granularity of indication and reducing the indication overhead; when the power parameter of the first pilot signal is pre-defined, signaling overhead can be saved.

### (II) Frequency domain position of time-frequency resources occupied by the first pilot signal.

Through this method, the frequency domain position of the time-frequency resources occupied by the first pilot signal can be flexibly changed, which is more conducive to multi-user multiplexing and reducing pilot signal interference between multiple users.

In the embodiments of the present disclosure, the frequency domain position of the time-frequency resources occupied by the first pilot signal may have the following several possible implementation manners.

A possible implementation manner is that the first information may indicate a frequency domain density of the time-frequency resources occupied by the first pilot signal; or the frequency domain density of the time-frequency resources occupied by the first pilot signal may be pre-defined. The frequency domain position of the time-frequency resources occupied by the first pilot signal may be determined according to the frequency domain density of the time-frequency resources occupied by the first pilot signal.

In the embodiments of the present disclosure, the frequency domain density of the time-frequency resources occupied by the first pilot signal may include: an RE density of the time-frequency resources occupied by the first pilot signal, and/or an RB density of the time-frequency resources occupied by the first pilot signal.

In the case where the frequency domain density of the time-frequency resources occupied by the first pilot signal is the RE density of the time-frequency resources occupied by the first pilot signal, the RE density of the time-frequency resources occupied by the first pilot signal may be an RE density of the time-frequency resources occupied by the first pilot signal within one RB. The RE density of the time-frequency resources occupied by the first pilot signal within one RB may be a fifth value, and there is a mapping relationship between the fifth value and the number of REs of the time-frequency resources occupied by the first pilot signal within the one RB.

Further, the mapping relationship may be a one-to-one mapping relationship or other mapping relationships, which is not limited in the embodiments of the present disclosure.

In some embodiments, when the fifth value is less than or equal to 1, the number of REs of the time-frequency resources occupied by the first pilot signal within one RB is the product of the fifth value and the total number of REs within the RB.

Exemplarily, assuming there are 12 REs (corresponding to 12 subcarriers) within one RB, and the RE density of the time-frequency resources occupied by the first pilot signal within the RB is 1/2 (i.e., the fifth value is 1/2), then the number of REs of the time-frequency resources occupied by the first pilot signal within the RB can be obtained as 12 * 1/2 = 6.

Exemplarily, assuming there are 12 REs (corresponding to 12 subcarriers) within one RB, and the RE density of the time-frequency resources occupied by the first pilot signal within the RB is 1 (i.e., the fifth value is 1), then the number of REs of the time-frequency resources occupied by the first pilot signal within the RB can be obtained as 12.

In other embodiments, when the fifth value is greater than 1, the number of REs of the time-frequency resources occupied by the first pilot signal within one RB is equal to the fifth value.

Exemplarily, assuming there are 12 REs (corresponding to 12 subcarriers) within one RB, and the RE density of the time-frequency resources occupied by the first pilot signal within the RB is 6 (i.e., the fifth value is 6), then the number of REs of the time-frequency resources occupied by the first pilot signal within the RB can be obtained as 6.

Through this method, when the frequency domain density of the time-frequency resources occupied by the first pilot signal is the RE density of the time-frequency resources occupied by the first pilot signal, the first device can flexibly change the RE density of the time-frequency resources occupied by the first pilot signal according to the wireless environment, thereby better matching the wireless channel and improving system performance.

In the case where the frequency domain density of the time-frequency resources occupied by the first pilot signal is the RB density of the time-frequency resources occupied by the first pilot signal, the RB density of the time-frequency resources occupied by the first pilot signal may be a sixth value. Assuming that 1 RB out of every X RBs is used for transmitting the first pilot signal, there is a mapping relationship between the sixth value and the value of X; where X is a positive integer.

Further, the mapping relationship may be a one-to-one mapping relationship or other mapping relationships, which is not limited in the embodiments of the present disclosure.

In some embodiments, when the sixth value is less than or equal to 1, the value of X is the reciprocal of the sixth value.

Exemplarily, assuming the RB density of the time-frequency resources occupied by the first pilot signal is 0.5 (i.e., the sixth value is 0.5), then the value of X is 1/0.5 = 2, that is, 1 RB out of every 2 RBs is used for transmitting the first pilot signal.

Exemplarily, assuming the RB density of the time-frequency resources occupied by the first pilot signal is 1 (i.e., the sixth value is 1), then the value of X is 1, that is, every RB is used for transmitting the first pilot signal.

In other embodiments, when the sixth value is greater than 1, the value of X is equal to the sixth value.

Exemplarily, assuming the RB density of the time-frequency resources occupied by the first pilot signal is 2 (i.e., the sixth value is 2), then the value of X is 2, that is, 1 RB out of every 2 RBs is used for transmitting the first pilot signal.

It should be noted that at least part of the REs in one RB of the time-frequency resources occupied by the first pilot signal are used for transmitting the first pilot signal.

Further, the at least part of the REs may be one RE in one RB, or multiple REs in one RB (not all REs in one RB), or all REs in one RB, which is not limited in the embodiments of the present disclosure.

Through this method, when the frequency domain density of the time-frequency resources occupied by the first pilot signal is the RB density of the time-frequency resources occupied by the first pilot signal, the first device can change the RB density of the time-frequency resources occupied by the first pilot signal with a larger granularity according to the wireless environment, providing better flexibility and being more conducive to multi-user multiplexing and reducing pilot signal interference between multiple users.

Another possible implementation manner is that the first information may indicate a frequency domain offset value of the time-frequency resources occupied by the first pilot signal; or the frequency domain offset value of the time-frequency resources occupied by the first pilot signal may be pre-defined. The frequency domain position of the time-frequency resources occupied by the first pilot signal may be determined according to the frequency domain offset value of the time-frequency resources occupied by the first pilot signal.

In the embodiments of the present disclosure, the frequency domain offset value of the time-frequency resources occupied by the first pilot signal may include: an RE offset value of the time-frequency resources occupied by the first pilot signal, and/or an RB offset value of the time-frequency resources occupied by the first pilot signal.

In the case where the frequency domain offset value of the time-frequency resources occupied by the first pilot signal is the RE offset value of the time-frequency resources occupied by the first pilot signal, according to the RE offset value of the time-frequency resources occupied by the first pilot signal and the number of REs of the time-frequency resources occupied by the first pilot signal within one RB, the REs of the time-frequency resources occupied by the first pilot signal within the RB can be obtained.

Exemplarily, assuming there are 12 REs (corresponding to 12 subcarriers) within one RB, the RE offset value of the time-frequency resources occupied by the first pilot signal is offset_RE, and the number of REs of the time-frequency resources occupied by the first pilot signal within the RB is Y, then the identifiers (or positions, similar elsewhere, not repeated) of the REs of the time-frequency resources occupied by the first pilot signal within the RB are respectively: offset_RE, offset_RE+12/Y, offset_RE+2*12/Y, offset_RE+3*12/Y, etc.; where Y is a positive integer.

Through this method, when the frequency domain offset value of the time-frequency resources occupied by the first pilot signal is the RE offset value of the time-frequency resources occupied by the first pilot signal, the first device can flexibly change the allocation of REs (or subcarriers) of the time-frequency resources occupied by the first pilot signal, which is more conducive to multi-user multiplexing and reducing pilot signal interference between multiple users.

In the case where the frequency domain offset value of the time-frequency resources occupied by the first pilot signal is the RB offset value of the time-frequency resources occupied by the first pilot signal, according to the RB offset value of the time-frequency resources occupied by the first pilot signal and the value of X (1 RB out of every X RBs is used for transmitting the first pilot signal), the RBs of the time-frequency resources occupied by the first pilot signal can be obtained.

Exemplarily, assuming the RB offset value of the time-frequency resources occupied by the first pilot signal is offset_RB, then the identifiers of the RBs of the time-frequency resources occupied by the first pilot signal are respectively: offset_RB, offset_RB+X, offset_RB+2*X, offset_RB+3*X, etc.

Through this method, when the frequency domain offset value of the time-frequency resources occupied by the first pilot signal is the RB offset value of the time-frequency resources occupied by the first pilot signal, the first device can flexibly change the allocation of RBs of the time-frequency resources occupied by the first pilot signal, which is more conducive to multi-user multiplexing and reducing pilot signal interference between multiple users.

Another possible implementation manner is that the first information may indicate a frequency domain pattern of the time-frequency resources occupied by the first pilot signal; or the frequency domain pattern of the time-frequency resources occupied by the first pilot signal is pre-defined. The frequency domain position of the time-frequency resources occupied by the first pilot signal may be determined according to the frequency domain pattern of the time-frequency resources occupied by the first pilot signal.

In the embodiments of the present disclosure, the frequency domain pattern of the time-frequency resources occupied by the first pilot signal may include: an RE pattern of the time-frequency resources occupied by the first pilot signal, and/or an RB pattern of the time-frequency resources occupied by the first pilot signal.

In the case where the frequency domain pattern of the time-frequency resources occupied by the first pilot signal is the RE pattern of the time-frequency resources occupied by the first pilot signal, the RE pattern may be determined by pre-definition and/or network device configuration. The RE pattern may identify the time-frequency resources occupied by the first pilot signal.

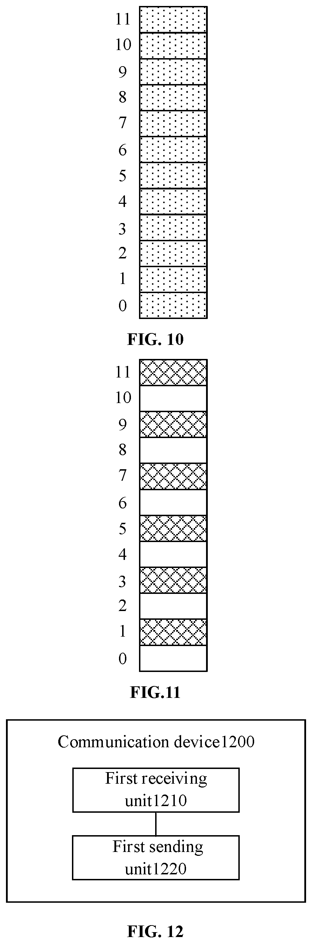

Exemplarily, FIG. 10 and FIG. 11 may be RE patterns determined by pre-definition and/or network device configuration, and the RE pattern of the time-frequency resources occupied by the first pilot signal may be one of the RE pattern shown in FIG. 10 and the RE pattern shown in FIG. 11.

Exemplarily, assuming the RE pattern of the time-frequency resources occupied by the first pilot signal is the RE pattern shown in FIG. 10, then the identifiers of the REs of the time-frequency resources occupied by the first pilot signal within one RB are respectively: 0, 1, 2, 3, 4, 5, 6, 7, 8, 9, 10, 11.

Exemplarily, assuming the RE pattern of the time-frequency resources occupied by the first pilot signal is the RE pattern shown in FIG. 11, then the identifiers of the REs of the time-frequency resources occupied by the first pilot signal within one RB are respectively: 1, 3, 5, 7, 9, 11.

It should be noted that whether the RE pattern of the time-frequency resources occupied by the first pilot signal is the RE pattern shown in FIG. 10 or the RE pattern shown in FIG. 11 can be determined by the indication of the first information; or it can be pre-defined that the RE pattern of the time-frequency resources occupied by the first pilot signal is the RE pattern shown in FIG. 10 or the RE pattern shown in FIG. 11, in which case, when the first information indicates the first pilot signal, it may implicitly indicate the RE pattern of the time-frequency resources occupied by the first pilot signal.

It should be noted that the examples shown in FIG. 10 and FIG. 11 are both based on one symbol. It should be understood that the examples based on FIG. 10 and FIG. 11 can also be directly extended to multiple symbols, which will not be described again in the embodiments of the present disclosure.

Through this method, when the frequency domain pattern of the time-frequency resources occupied by the first pilot signal is the RE pattern of the time-frequency resources occupied by the first pilot signal, the first device can flexibly change the allocation of REs (or subcarriers) of the time-frequency resources occupied by the first pilot signal, which is more conducive to multi-user multiplexing and reducing pilot signal interference between multiple users. In addition, the RE pattern of the time-frequency resources occupied by the first pilot signal can be determined by pre-definition and/or network device configuration, thereby enabling lower signaling overhead.

In the case where the frequency domain pattern of the time-frequency resources occupied by the first pilot signal is the RB pattern of the time-frequency resources occupied by the first pilot signal, the RB pattern may be determined by pre-definition and/or network device configuration. The RB pattern may identify the time-frequency resources occupied by the first pilot signal.

It should also be noted that the exemplary description of the RB pattern of the time-frequency resources occupied by the first pilot signal can be understood with reference to the description in the previous embodiments, and for brevity, details are not repeated here.

Through this method, when the frequency domain pattern of the time-frequency resources occupied by the first pilot signal is the RB pattern of the time-frequency resources occupied by the first pilot signal, the first device can flexibly change the allocation of RBs of the time-frequency resources occupied by the first pilot signal, which is more conducive to multi-user multiplexing and reducing pilot signal interference between multiple users. In addition, the RB pattern of the time-frequency resources occupied by the first pilot signal can be determined by pre-definition and/or network device configuration, thereby enabling lower signaling overhead.

Based on the above several possible implementation manners, the frequency domain position of the time-frequency resources occupied by the first pilot signal may be determined according to one or more of the following parameters indicated by the first information:
frequency domain density of the time-frequency resources occupied by the first pilot signal;
frequency domain offset value of the time-frequency resources occupied by the first pilot signal; or
frequency domain pattern of the time-frequency resources occupied by the first pilot signal.

Exemplarily, the frequency domain position of the time-frequency resources occupied by the first pilot signal may be determined according to the frequency domain density of the time-frequency resources occupied by the first pilot signal. For example, the frequency domain position of the time-frequency resources occupied by the first pilot signal may be determined according to the RE density of the time-frequency resources occupied by the first pilot signal, in which case the RE offset value of the time-frequency resources occupied by the first pilot signal may be determined by pre-definition and/or network device configuration; and/or the frequency domain position of the time-frequency resources occupied by the first pilot signal may be determined according to the RB density of the time-frequency resources occupied by the first pilot signal, in which case the RB offset value of the time-frequency resources occupied by the first pilot signal may be determined by pre-definition and/or network device configuration.

Exemplarily, the frequency domain position of the time-frequency resources occupied by the first pilot signal may be determined according to the frequency domain offset value of the time-frequency resources occupied by the first pilot signal. For example, the frequency domain position of the time-frequency resources occupied by the first pilot signal may be determined according to the RE offset value of the time-frequency resources occupied by the first pilot signal, in which case the RE density of the time-frequency resources occupied by the first pilot signal may be determined by pre-definition and/or network device configuration; and/or the frequency domain position of the time-frequency resources occupied by the first pilot signal may be determined according to the RB offset value of the time-frequency resources occupied by the first pilot signal, in which case the RB density of the time-frequency resources occupied by the first pilot signal may be determined by pre-definition and/or network device configuration.

Exemplarily, the frequency domain position of the time-frequency resources occupied by the first pilot signal may be determined according to the frequency domain pattern of the time-frequency resources occupied by the first pilot signal. For example, the frequency domain position of the time-frequency resources occupied by the first pilot signal may be determined according to the RE pattern of the time-frequency resources occupied by the first pilot signal; and/or the frequency domain position of the time-frequency resources occupied by the first pilot signal may be determined according to the RB pattern of the time-frequency resources occupied by the first pilot signal.

Exemplarily, the frequency domain position of the time-frequency resources occupied by the first pilot signal may be determined according to the frequency domain density and the frequency domain offset value of the time-frequency resources occupied by the first pilot signal. For example, the frequency domain position of the time-frequency resources occupied by the first pilot signal may be determined according to the RE density and/or RB density of the time-frequency resources occupied by the first pilot signal, and the RE offset value and/or RB offset value of the time-frequency resources occupied by the first pilot signal.

Exemplarily, the frequency domain position of the time-frequency resources occupied by the first pilot signal may be determined according to the frequency domain density and the frequency domain pattern of the time-frequency resources occupied by the first pilot signal. For example, the frequency domain position of the time-frequency resources occupied by the first pilot signal may be determined according to the RE density and/or RB density of the time-frequency resources occupied by the first pilot signal, and the RE pattern and/or RB pattern of the time-frequency resources occupied by the first pilot signal.

Exemplarily, the frequency domain position of the time-frequency resources occupied by the first pilot signal may be determined according to the frequency domain offset value and the frequency domain pattern of the time-frequency resources occupied by the first pilot signal. For example, the frequency domain position of the time-frequency resources occupied by the first pilot signal may be determined according to the RE offset value and/or RB offset value of the time-frequency resources occupied by the first pilot signal, and the RE pattern and/or RB pattern of the time-frequency resources occupied by the first pilot signal.

Exemplarily, the frequency domain position of the time-frequency resources occupied by the first pilot signal may be determined according to the frequency domain density, the frequency domain offset value, and the frequency domain pattern of the time-frequency resources occupied by the first pilot signal. For example, the frequency domain position of the time-frequency resources occupied by the first pilot signal may be determined according to the RE density and/or RB density of the time-frequency resources occupied by the first pilot signal, and the RE offset value and/or RB offset value of the time-frequency resources occupied by the first pilot signal, and the RE pattern and/or RB pattern of the time-frequency resources occupied by the first pilot signal.

In the embodiments of the present disclosure, when the frequency domain position of the time-frequency resources occupied by the first pilot signal is indicated by the first information, there may be the following two possible implementation manners.

A possible implementation manner is that the first information may indicate the frequency domain position of the time-frequency resources occupied by the first pilot signal through a first bitmap.

Exemplarily, the first information may indicate, through a first bitmap, RBs used for transmitting the first pilot signal, and/or REs within one RB used for transmitting the first pilot signal. For example, the first information may indicate, through a first bitmap of length 12 bits or 16 bits, REs within one RB used for transmitting the first pilot signal; where REs corresponding to a value of 1 in the first bitmap are used for transmitting the first pilot signal.

Through this method, the first information can indicate, through a first bitmap, RBs used for transmitting the first pilot signal, and/or REs within one RB used for transmitting the first pilot signal, thereby improving the flexibility of the first information in indicating the frequency domain position of the time-frequency resources occupied by the first pilot signal.

Another possible implementation manner is that the first information may indicate the frequency domain position of the time-frequency resources occupied by the first pilot signal through an identifier of a frequency domain resource.

It should be noted that the manner in which the first information indicates the frequency domain position of the time-frequency resources occupied by the first pilot signal through an identifier of a frequency domain resource is a manner of directly indicating the frequency domain position of the time-frequency resources occupied by the first pilot signal.

Exemplarily, the first information may indicate, through an identifier of an RE, REs within one RB used for transmitting the first pilot signal; and/or the first information may indicate, through an identifier of an RB, RBs used for transmitting the first pilot signal.

Through this method, the first information directly indicates the frequency domain position of the time-frequency resources occupied by the first pilot signal through an identifier of a frequency domain resource, thereby improving the flexibility of the first information in indicating the frequency domain position of the time-frequency resources occupied by the first pilot signal.

(III) Time domain position of time-frequency resources occupied by the first pilot signal.

Through this method, the time domain position of the time-frequency resources occupied by the first pilot signal can be flexibly changed, thereby achieving a good balance between the total power of the pilot signal and channel estimation performance, and improving system performance.

In the embodiments of the present disclosure, the time domain position of the time-frequency resources occupied by the first pilot signal may have the following several possible implementation manners.

A possible implementation manner is that the first information may indicate a time domain density of the time-frequency resources occupied by the first pilot signal; or the time domain density of the time-frequency resources occupied by the first pilot signal is pre-defined. The time domain position of the time-frequency resources occupied by the first pilot signal may be determined according to the time domain density of the time-frequency resources occupied by the first pilot signal.

In the embodiments of the present disclosure, the time domain density of the time-frequency resources occupied by the first pilot signal may include: a symbol density of the time-frequency resources occupied by the first pilot signal, and/or a slot density of the time-frequency resources occupied by the first pilot signal.

In the case where the time domain density of the time-frequency resources occupied by the first pilot signal is the symbol density of the time-frequency resources occupied by the first pilot signal, the symbol density of the time-frequency resources occupied by the first pilot signal may be a symbol density of the time-frequency resources occupied by the first pilot signal within one slot. The symbol density of the time-frequency resources occupied by the first pilot signal within one slot may be a seventh value, and there is a mapping relationship between the seventh value and the number of symbols of the time-frequency resources occupied by the first pilot signal within the one slot.

Further, the mapping relationship may be a one-to-one mapping relationship or other mapping relationships, which is not limited in the embodiments of the present disclosure.

In some embodiments, when the seventh value is less than or equal to 1, the number of symbols of the time-frequency resources occupied by the first pilot signal within one slot is the product of the seventh value and the total number of symbols within the slot.

Exemplarily, assuming there are 14 symbols within one slot, and the symbol density of the time-frequency resources occupied by the first pilot signal within the slot is 1/2 (i.e., the seventh value is 1/2), then the number of symbols of the time-frequency resources occupied by the first pilot signal within the slot can be obtained as 14 * 1/2 = 7.

Exemplarily, assuming there are 14 symbols within one slot, and the symbol density of the time-frequency resources occupied by the first pilot signal within the slot is 1 (i.e., the seventh value is 1), then the number of symbols of the time-frequency resources occupied by the first pilot signal within the slot can be obtained as 14.

In other embodiments, when the seventh value is greater than 1, the number of symbols of the time-frequency resources occupied by the first pilot signal within one slot is equal to the seventh value.

Exemplarily, assuming there are 14 symbols within one slot, and the symbol density of the time-frequency resources occupied by the first pilot signal within the slot is 6 (i.e., the seventh value is 6), then the number of symbols of the time-frequency resources occupied by the first pilot signal within the slot can be obtained as 6.

Through this method, when the time domain density of the time-frequency resources occupied by the first pilot signal is the symbol density of the time-frequency resources occupied by the first pilot signal, the first device can flexibly change the symbol density of the time-frequency resources occupied by the first pilot signal according to the wireless environment, thereby better matching the current channel and improving system performance.

In the case where the time domain density of the time-frequency resources occupied by the first pilot signal is the slot density of the time-frequency resources occupied by the first pilot signal, the slot density of the time-frequency resources occupied by the first pilot signal may be an eighth value. Assuming that 1 slot out of every P slots is used for transmitting the first pilot signal, there is a mapping relationship between the eighth value and the value of P; where P is a positive integer.

Further, the mapping relationship may be a one-to-one mapping relationship or other mapping relationships, which is not limited in the embodiments of the present disclosure.

In some embodiments, when the eighth value is less than or equal to 1, the value of P is the reciprocal of the eighth value.

Exemplarily, assuming the slot density of the time-frequency resources occupied by the first pilot signal is 0.5 (i.e., the eighth value is 0.5), then the value of P is 1/0.5 = 2, that is, 1 slot out of every 2 slots is used for transmitting the first pilot signal.

Exemplarily, assuming the slot density of the time-frequency resources occupied by the first pilot signal is 1 (i.e., the eighth value is 1), then the value of P is 1, that is, every slot is used for transmitting the first pilot signal.

In other embodiments, when the eighth value is greater than 1, the value of P is equal to the eighth value.

Exemplarily, assuming the slot density of the time-frequency resources occupied by the first pilot signal is 2 (i.e., the eighth value is 2), then the value of P is 2, that is, 1 slot out of every 2 slots is used for transmitting the first pilot signal.

It should be noted that at least part of the symbols in one slot of the time-frequency resources occupied by the first pilot signal are used for transmitting the first pilot signal.

Further, the at least part of the symbols may be one symbol in one slot, or multiple symbols in one slot (not all symbols in one slot), or all symbols in one slot, which is not limited in the embodiments of the present disclosure.

Through this method, when the time domain density of the time-frequency resources occupied by the first pilot signal is the slot density of the time-frequency resources occupied by the first pilot signal, the first device can change the slot density of the time-frequency resources occupied by the first pilot signal with a larger granularity according to the wireless environment, providing better flexibility and being more conducive to multi-user multiplexing and reducing pilot signal interference between multiple users.

Another possible implementation manner is that the first information may indicate a time domain offset value of the time-frequency resources occupied by the first pilot signal; or the time domain offset value of the time-frequency resources occupied by the first pilot signal may be pre-defined. The time domain position of the time-frequency resources occupied by the first pilot signal may be determined according to the time domain offset value of the time-frequency resources occupied by the first pilot signal.

In the embodiments of the present disclosure, the time domain offset value of the time-frequency resources occupied by the first pilot signal may include: a symbol offset value of the time-frequency resources occupied by the first pilot signal, and/or a slot offset value of the time-frequency resources occupied by the first pilot signal.

In the case where the time domain offset value of the time-frequency resources occupied by the first pilot signal is the symbol offset value of the time-frequency resources occupied by the first pilot signal, according to the symbol offset value of the time-frequency resources occupied by the first pilot signal and the number of symbols of the time-frequency resources occupied by the first pilot signal within one slot, the symbols of the time-frequency resources occupied by the first pilot signal within the slot can be obtained.

Exemplarily, assuming there are 14 symbols within one slot, the symbol offset value of the time-frequency resources occupied by the first pilot signal is offset_symbol, and the number of symbols of the time-frequency resources occupied by the first pilot signal within the slot is Q, then the identifiers of the symbols of the time-frequency resources occupied by the first pilot signal within the slot are respectively: offset_symbol, offset_symbol+14/Q, offset_symbol+2*14/Q, offset_symbol+3*14/Q, etc.; where Q is a positive integer.

Through this method, when the time domain offset value of the time-frequency resources occupied by the first pilot signal is the symbol offset value of the time-frequency resources occupied by the first pilot signal, the first device can flexibly change the allocation of symbols of the time-frequency resources occupied by the first pilot signal, which can better match the current channel and is more conducive to multi-user multiplexing and reducing pilot signal interference between multiple users.

In the case where the time domain offset value of the time-frequency resources occupied by the first pilot signal is the slot offset value of the time-frequency resources occupied by the first pilot signal, according to the slot offset value of the time-frequency resources occupied by the first pilot signal and the value of P (1 slot out of every P slots is used for transmitting the first pilot signal), the slots of the time-frequency resources occupied by the first pilot signal can be obtained.

Exemplarily, assuming the slot offset value of the time-frequency resources occupied by the first pilot signal is offset_slot, then the identifiers of the slots of the time-frequency resources occupied by the first pilot signal are respectively: offset_slot, offset_slot + P, offset_slot + 2*P, offset_slot + 3*P, etc.

Through this method, when the time domain offset value of the time-frequency resources occupied by the first pilot signal is the slot offset value of the time-frequency resources occupied by the first pilot signal, the first device can flexibly change the allocation of slots of the time-frequency resources occupied by the first pilot signal, which can better match the wireless channel and is more conducive to multi-user multiplexing and reducing pilot signal interference between multiple users.

Another possible implementation manner is that the first information may indicate a time domain pattern of the time-frequency resources occupied by the first pilot signal; or the time domain pattern of the time-frequency resources occupied by the first pilot signal is pre-defined. The time domain position of the time-frequency resources occupied by the first pilot signal may be determined according to the time domain pattern of the time-frequency resources occupied by the first pilot signal.

In the embodiments of the present disclosure, the time domain pattern of the time-frequency resources occupied by the first pilot signal may include: a symbol pattern of the time-frequency resources occupied by the first pilot signal, and/or a slot pattern of the time-frequency resources occupied by the first pilot signal.

In the case where the time domain pattern of the time-frequency resources occupied by the first pilot signal is the symbol pattern of the time-frequency resources occupied by the first pilot signal, the symbol pattern may be determined by pre-definition and/or network device configuration. The symbol pattern may identify the time-frequency resources occupied by the first pilot signal.

It should also be noted that the exemplary description of the symbol pattern of the time-frequency resources occupied by the first pilot signal can be understood with reference to the description in the previous embodiments, and for brevity, details are not repeated here.

Through this method, when the time domain pattern of the time-frequency resources occupied by the first pilot signal is the symbol pattern of the time-frequency resources occupied by the first pilot signal, the first device can flexibly change the allocation of symbols of the time-frequency resources occupied by the first pilot signal, which is more conducive to multi-user multiplexing and reducing pilot signal interference between multiple users. In addition, the symbol pattern of the time-frequency resources occupied by the first pilot signal can be determined by pre-definition and/or network device configuration, thereby enabling lower signaling overhead.

In the case where the time domain pattern of the time-frequency resources occupied by the first pilot signal is the slot pattern of the time-frequency resources occupied by the first pilot signal, the slot pattern may be determined by pre-definition and/or network device configuration. The slot pattern may identify the time-frequency resources occupied by the first pilot signal.

It should also be noted that the exemplary description of the slot pattern of the time-frequency resources occupied by the first pilot signal can be understood with reference to the description in the previous embodiments, and for brevity, details are not repeated here.

Through this method, when the time domain pattern of the time-frequency resources occupied by the first pilot signal is the slot pattern of the time-frequency resources occupied by the first pilot signal, the first device can flexibly change the allocation of slots of the time-frequency resources occupied by the first pilot signal, which is more conducive to multi-user multiplexing and reducing pilot signal interference between multiple users. In addition, the slot pattern of the time-frequency resources occupied by the first pilot signal can be determined by pre-definition and/or network device configuration, thereby enabling lower signaling overhead.

Based on the above several possible implementation manners, the time domain position of the time-frequency resources occupied by the first pilot signal may be determined according to one or more of the following parameters indicated by the first information:
time domain density of the time-frequency resources occupied by the first pilot signal;
time domain offset value of the time-frequency resources occupied by the first pilot signal; or
time domain pattern of the time-frequency resources occupied by the first pilot signal.

Exemplarily, the time domain position of the time-frequency resources occupied by the first pilot signal may be determined according to the time domain density of the time-frequency resources occupied by the first pilot signal. For example, the time domain position of the time-frequency resources occupied by the first pilot signal may be determined according to the symbol density of the time-frequency resources occupied by the first pilot signal, in which case the symbol offset value of the time-frequency resources occupied by the first pilot signal may be determined by pre-definition and/or network device configuration; and/or the time domain position of the time-frequency resources occupied by the first pilot signal may be determined according to the slot density of the time-frequency resources occupied by the first pilot signal, in which case the slot offset value of the time-frequency resources occupied by the first pilot signal may be determined by pre-definition and/or network device configuration.

Exemplarily, the time domain position of the time-frequency resources occupied by the first pilot signal may be determined according to the time domain offset value of the time-frequency resources occupied by the first pilot signal. For example, the time domain position of the time-frequency resources occupied by the first pilot signal may be determined according to the symbol offset value of the time-frequency resources occupied by the first pilot signal, in which case the symbol density of the time-frequency resources occupied by the first pilot signal may be determined by pre-definition and/or network device configuration; and/or the time domain position of the time-frequency resources occupied by the first pilot signal may be determined according to the slot offset value of the time-frequency resources occupied by the first pilot signal, in which case the slot density of the time-frequency resources occupied by the first pilot signal may be determined by pre-definition and/or network device configuration.

Exemplarily, the time domain position of the time-frequency resources occupied by the first pilot signal may be determined according to the time domain pattern of the time-frequency resources occupied by the first pilot signal. For example, the time domain position of the time-frequency resources occupied by the first pilot signal may be determined according to the symbol pattern of the time-frequency resources occupied by the first pilot signal; and/or the time domain position of the time-frequency resources occupied by the first pilot signal may be determined according to the slot pattern of the time-frequency resources occupied by the first pilot signal.

Exemplarily, the time domain position of the time-frequency resources occupied by the first pilot signal may be determined according to the time domain density and the time domain offset value of the time-frequency resources occupied by the first pilot signal. For example, the time domain position of the time-frequency resources occupied by the first pilot signal may be determined according to the symbol density and/or slot density of the time-frequency resources occupied by the first pilot signal, and the symbol offset value and/or slot offset value of the time-frequency resources occupied by the first pilot signal.

Exemplarily, the time domain position of the time-frequency resources occupied by the first pilot signal may be determined according to the time domain density and the time domain pattern of the time-frequency resources occupied by the first pilot signal. For example, the time domain position of the time-frequency resources occupied by the first pilot signal may be determined according to the symbol density and/or slot density of the time-frequency resources occupied by the first pilot signal, and the symbol pattern and/or slot pattern of the time-frequency resources occupied by the first pilot signal.

Exemplarily, the time domain position of the time-frequency resources occupied by the first pilot signal may be determined according to the time domain offset value and the time domain pattern of the time-frequency resources occupied by the first pilot signal. For example, the time domain position of the time-frequency resources occupied by the first pilot signal may be determined according to the symbol offset value and/or slot offset value of the time-frequency resources occupied by the first pilot signal, and the symbol pattern and/or slot pattern of the time-frequency resources occupied by the first pilot signal.

Exemplarily, the time domain position of the time-frequency resources occupied by the first pilot signal may be determined according to the time domain density, the time domain offset value, and the time domain pattern of the time-frequency resources occupied by the first pilot signal. For example, the time domain position of the time-frequency resources occupied by the first pilot signal may be determined according to the symbol density and/or slot density of the time-frequency resources occupied by the first pilot signal, and the symbol offset value and/or slot offset value of the time-frequency resources occupied by the first pilot signal, and the symbol pattern and/or slot pattern of the time-frequency resources occupied by the first pilot signal.

In the embodiments of the present disclosure, when the time domain position of the time-frequency resources occupied by the first pilot signal is indicated by the first information, there may be the following two possible implementation manners.

A possible implementation manner is that the first information indicates the time domain position of the time-frequency resources occupied by the first pilot signal through a second bitmap.

Exemplarily, the first information may indicate, through a second bitmap, slots used for transmitting the first pilot signal, and/or symbols within one slot used for transmitting the first pilot signal. For example, the first information may indicate, through a second bitmap of length 14 bits, symbols within one slot used for transmitting the first pilot signal; where symbols corresponding to a value of 1 in the second bitmap are used for transmitting the first pilot signal.

Through this method, the first information can indicate, through a second bitmap, slots used for transmitting the first pilot signal, and/or symbols within one slot used for transmitting the first pilot signal, thereby improving the flexibility of the first information in indicating the time domain position of the time-frequency resources occupied by the first pilot signal.

Another possible implementation manner is that the first information may indicate the time domain position of the time-frequency resources occupied by the first pilot signal through an identifier of a time domain resource.

It should be noted that the manner in which the first information indicates the time domain position of the time-frequency resources occupied by the first pilot signal through an identifier of a time domain resource is a manner of directly indicating the time domain position of the time-frequency resources occupied by the first pilot signal.

Exemplarily, the first information may indicate, through an identifier of a symbol, symbols within one slot used for transmitting the first pilot signal; and/or the first information may indicate, through an identifier of a slot, slots used for transmitting the first pilot signal.

Through this method, the first information directly indicates the time domain position of the time-frequency resources occupied by the first pilot signal through an identifier of a time domain resource, thereby improving the flexibility of the first information in indicating the time domain position of the time-frequency resources occupied by the first pilot signal.

### (IV) Sequence generation method of the first pilot signal.

In the embodiments of the present disclosure, the sequence generation method of the first pilot signal may be a generation method for different types of sequences.

Exemplarily, the type of sequence may be a Gold sequence, a ZC sequence, an M sequence, etc., which is not limited in the embodiments of the present disclosure.

Through this method, sequences between different users can be optimized based on the sequence generation method of the first pilot signal, reducing interference between sequences and improving system performance.

### (V) Sequence generation parameter of the first pilot signal.

Exemplarily, the sequence generation parameter of the first pilot signal may include one or more groups of sequence generation parameters, where each group of sequence generation parameters may include one or more sequence generation parameters.

Exemplarily, the second device may select the sequence generation parameter of the first pilot signal through DCI signaling.

Through this method, the second device can select the sequence generation parameter of the first pilot signal through DCI signaling, thereby improving flexibility.

It should be noted that, when there are multiple sequence generation parameters for the first pilot signal, different sequence generation parameters may correspond to different ports of the first pilot signal.

In the embodiments of the present disclosure, the sequence generation parameter of the first pilot signal may include one or more of:
an identifier of a time domain resource among the time-frequency resources occupied by the first pilot signal;
an identifier of a system frame number (SNF) where the first pilot signal is located;
an identifier of a cell where the first pilot signal is located;
an identifier of a carrier where the first pilot signal is located;
an identifier of a port of the first pilot signal;
a scrambling parameter of the first pilot signal;
an identifier of the control channel; or
other parameters configured by the network device.

It should be noted that the identifier of the time domain resource among the time-frequency resources occupied by the first pilot signal may include one or more of: an identifier (or position, similar elsewhere, not repeated) of a slot among the time-frequency resources occupied by the first pilot signal; an identifier (or position, similar elsewhere, not repeated) of a symbol of the time-frequency resources occupied by the first pilot signal; or an identifier of a symbol of the time-frequency resources occupied by the first pilot signal within one slot, within one sub-frame, or within one frame.

Exemplarily, the identifier of the cell where the first pilot signal is located may be an identifier of a physical layer cell where the first pilot signal is located.

Exemplarily, the carrier where the first pilot signal is located may be a component carrier in carrier aggregation.

It should be noted that the sequence generation corresponding to port i of the first pilot signal may be based on the port identifier i. Further, the identifier of the port of the first pilot signal may be an identifier of a part of the ports of the first pilot signal, or an identifier of each port of the first pilot signal, which is not limited in the embodiments of the present disclosure.

It should also be noted that the identifier of the control channel may be a group identifier corresponding to the CORESET (e.g., CORESET pool index in the NR system).

Through this method, sequences between different users can be optimized based on the sequence generation parameter of the first pilot signal, reducing interference between sequences and improving system performance.

In the embodiments of the present disclosure, on one hand, obtaining the relevant parameters of the first pilot signal based on the indication of the first information can improve the flexibility of obtaining the relevant parameters of the first pilot signal; on the other hand, obtaining the relevant parameters of the first pilot signal based on a pre-defined manner can reduce signaling overhead.

In some embodiments, the first pilot signal is not used for one or more of:
transmission corresponding to a control resource set identified by a first value;
transmission corresponding to a search space identified by a second value;
transmission corresponding to a control resource set corresponding to a search space identified by a third value;
transmission corresponding to a search space for system information block 1 reception;
transmission corresponding to a control resource set corresponding to a search space for system information block 1 reception;
transmission corresponding to a search space for other system information reception, where the other system information is system information other than system information block 1;
transmission corresponding to a control resource set corresponding to a search space other system information;
transmission corresponding to a search space for paging;
transmission corresponding to a control resource set corresponding to a search space for paging;
transmission corresponding to a search space for random access;
transmission corresponding to a control resource set corresponding to a search space for random access; and
transmission corresponding to a common search space.

Exemplarily, the first value may be 0. The first pilot signal may not be used for transmission corresponding to control resource set 0.

Exemplarily, a search space may also be referred to as a search space set, and search space and search space set refer to the same concept in the protocol.

Exemplarily, the second value may be 0. The first pilot signal may not be used for transmission corresponding to search space 0.

Exemplarily, the third value may be 0. The first pilot signal may not be used for transmission corresponding to the control resource set corresponding to search space 0.

Through this method, when the first pilot signal is not used for one or more of the above items, the above items still use the system default or pre-defined pilot signal, thereby avoiding a fuzzy phase when switching between different pilot signals and improving system stability.

It should be noted that in the embodiments of the present disclosure, according to the first information, the first device may use the first pilot signal for corresponding control channel reception. For example, the first device may receive two pieces of first information, one piece of first information corresponding to one control resource set, and the other piece of first information corresponding to another control resource set.

In some embodiments, when the number of repeated transmissions of the control channel includes at least two, the number of first pilot signals includes at least two;
wherein at least two first pilot signals maintain the same configuration in one or more of:
at least part of time-frequency resources respectively occupied by the at least two first pilot signals are used for transmitting control information of the control channel;
frequency domain densities of time-frequency resources respectively occupied by the at least two first pilot signals;
time domain densities of time-frequency resources respectively occupied by the at least two first pilot signals; or
power parameters respectively of the at least two first pilot signals.

It should be noted that the number of repeated transmissions of the control channel is associated with the number of first pilot signals. For example, assuming the control channel is repeatedly transmitted twice, the first transmission of the control channel corresponds to one first pilot signal, and the second transmission of the control channel corresponds to another first pilot signal.

It should also be noted that at least part of the time-frequency resources respectively occupied by the at least two first pilot signals being used for transmitting control information can be understood as that the at least two first pilot signals and the control information use one or more identical time-frequency resources (not all time-frequency resources); or all time-frequency resources respectively occupied by the at least two first pilot signals are simultaneously used for control information.

Further, in some embodiments, time-frequency resources occupied by at least one of the at least two first pilot signals are not used for transmitting control information of the control channel, and at least part of time-frequency resources occupied by at least another one of the at least two first pilot signals are used for transmitting control information of the control channel.

Through this method, when the performance of at least another one (corresponding to the non-orthogonal first pilot signal) among the at least two first pilot signals is poor, the control channel can also be demodulated independently using at least one (corresponding to the orthogonal first pilot signal) among the at least two first pilot signals.

In some embodiments, a second pilot signal of a data channel scheduled by first downlink control information DCI transmitted on the control channel and the first pilot signal maintain the same configuration in one or more of:
at least part of time-frequency resources occupied by the second pilot signal are used for transmitting data information of the data channel, and at least part of time-frequency resources occupied by the first pilot signal are used for transmitting control information of the control channel;
time-frequency resources occupied by the second pilot signal are not used for transmitting data information of the data channel, and time-frequency resources occupied by the first pilot signal are not used for transmitting control information of the control channel;
power parameters of the second pilot signal and the first pilot signal respectively;
sequence generation methods of the second pilot signal and the first pilot signal respectively;
frequency domain densities of time-frequency resources occupied by the second pilot signal and the first pilot signal respectively; or
time domain densities of time-frequency resources occupied by the second pilot signal and the first pilot signal respectively.

Exemplarily, the data channel may be a Physical Downlink Shared Channel (PDSCH).

Exemplarily, the data channel may be a Physical Sidelink Shared Channel (PSSCH).

It should be noted that the first pilot signal and the second pilot signal maintaining the same configuration in one or more parameters can be understood as that the first pilot signal and the second pilot signal can be configured with the same one or more parameters; or the first pilot signal is configured with one or more parameters, and the second pilot signal is not configured with the one or more parameters but directly adopts the one or more parameters configured for the first pilot signal (i.e., shared configuration); or the second pilot signal is configured with one or more parameters, and the first pilot signal is not configured with the one or more parameters but directly adopts the one or more parameters configured for the second pilot signal (i.e., shared configuration); or the second device configures one or more parameters (e.g., the one or more parameters are not directly included in the corresponding fields (Field or IE) of the first pilot signal and the second pilot signal), and the first pilot signal and the second pilot signal directly adopt the one or more parameters (i.e., shared configuration).

In some embodiments, assuming there are two control resource sets/search spaces in the control channel, it may be determined whether the second pilot signal of the data channel is an orthogonal pilot signal or a non-orthogonal pilot signal according to which control resource set/search space the first DCI scheduling the data channel comes from. For example, if the first pilot signal corresponding to the control resource set/search space transmitting the first DCI is a non-orthogonal pilot signal, then the second pilot signal is also a non-orthogonal pilot signal; for another example, if the first pilot signal corresponding to the control resource set/search space transmitting the first DCI is an orthogonal pilot signal, then the second pilot signal is also an orthogonal pilot signal.

In other embodiments, when the control channel is configured with a non-orthogonal first pilot signal, regardless of which control resource set the first DCI comes from, the data channel scheduled by the first DCI adopts a non-orthogonal second pilot signal. In this case, the first DCI belongs to a UE-specific search space. For example, assuming there are two control resource sets/UE-specific search spaces in the control channel, and the two control resource sets/UE-specific search spaces are configured with an orthogonal pilot signal and a non-orthogonal pilot signal respectively, regardless of which control resource set/UE-specific search space the first DCI comes from, the data channel scheduled by the first DCI adopts a non-orthogonal second pilot signal.

That is, in the case where at least part of the time-frequency resources occupied by the first pilot signal of the control channel are also used for control information transmission, at least part of the time-frequency resources occupied by the second pilot signal are also used for data information transmission.

It should be noted that, in the case where the parameters of the first pilot signal and the second pilot signal can have differently configured values, the control channel and the data channel are independently configured.

Through this method, the first pilot signal and the second pilot signal maintain the same configuration or share configuration, which can reduce configuration signaling and reduce the processing complexity of the first device.

In some embodiments, before the first device receives the first information from the second device, the method may further include: sending, by the first device, first capability information to the second device, where the first capability information represents that the first device supports receiving the first information; or the first capability information indicates that the first device supports a plurality of pilot signals, for example, the first device may support multiple pilot signals for the control channel.

Correspondingly, before the second device sends the first information to the first device, the second device may receive the first capability information.

In some embodiments, before the first device receives the first information from the second device, the method may further include: sending, by the first device, second capability information to the second device, where the second capability information represents that the first device supports the first pilot signal, and at least part of time-frequency resources occupied by the first pilot signal are used for transmitting control information of the control channel.

Correspondingly, before the second device sends the first information to the first device, the second device may receive the second capability information.

Further, the first device may send the first capability information and/or the second capability information through one or more of RRC signaling, MAC CE signaling, or DCI signaling.

In some embodiments, the first capability information and/or the second capability information is capability information for any one of the following objects:
a frequency band;
a band combination;
each frequency band in a band combination;
each carrier on each frequency band in a band combination;
a frequency range (FR);
the first device.

It should be noted that the first capability information and/or the second capability information may be capability information for a frequency band. That is, different frequency bands (Per Band) can independently report corresponding first capability information and/or second capability information. Based on this, the first device can have greater freedom. For example, the first device may support reporting corresponding first capability information and/or second capability information on some frequency bands, and not support reporting corresponding first capability information and/or second capability information on other frequency bands, thereby enabling more first devices to support reporting corresponding first capability information and/or second capability information.

It should also be noted that the first capability information and/or the second capability information may be capability information for a band combination, that is, different band combinations can independently report corresponding first capability information and/or second capability information (Per Band Combination). Based on this, the first device can have greater freedom. For example, the first device may support reporting corresponding first capability information and/or second capability information on some band combinations, and not support reporting corresponding first capability information and/or second capability information on other band combinations, thereby enabling more first devices to support reporting corresponding first capability information and/or second capability information.

It should also be noted that the first capability information and/or the second capability information may be capability information for each frequency band in a band combination, that is, each frequency band in different band combinations (Per Band Per Band Combination) can independently report corresponding first capability information and/or second capability information. Based on this, the first device can have greater freedom. For example, the first device may not support reporting corresponding first capability information and/or second capability information in a certain Carrier Aggregation (CA) combination, but may support reporting corresponding first capability information and/or second capability information on some frequency bands in another CA combination, thereby enabling more first devices to support reporting corresponding first capability information and/or second capability information.

It should also be noted that the first capability information and/or the second capability information may be capability information for each carrier on each frequency band in a band combination, that is, different component carriers (CC) in frequency bands in different band combinations (Per CC Per Band Per Band Combination) can independently report corresponding first capability information and/or second capability information. Based on this, the first device can have greater freedom. For example, different band combinations can independently report corresponding first capability information and/or second capability information, and different carriers on one frequency band can also independently report corresponding first capability information and/or second capability information, thereby enabling more first devices to support reporting corresponding first capability information and/or second capability information.

It should also be noted that the first capability information and/or the second capability information may be capability information for FR, that is, different FRs (Per FR) can independently report corresponding first capability information and/or second capability information. Based on this, the first device can have greater freedom. For example, there are two FRs, denoted as low-frequency FR (i.e., FR1) and high-frequency FR (i.e., FR2). FR1 may not support reporting corresponding first capability information and/or second capability information, and FR2 may support reporting corresponding first capability information and/or second capability information, thereby enabling more first devices to support reporting corresponding first capability information and/or second capability information.

It should also be noted that the first capability information and/or the second capability information may be capability information for the first device. Based on this, in the case where the first device reports the first capability information and/or the second capability information, it can be considered that the first device can support reporting the first capability information and/or the second capability information on all frequency bands, thereby reducing the signaling overhead for capability reporting of the first device.

In some embodiments, the first capability information and/or the second capability information includes one or more of:
supported power parameter of the first pilot signal;
supported frequency domain pattern of the first pilot signal;
supported time domain pattern of the first pilot signal;
supported frequency domain density of the first pilot signal; or
supported time domain density of the first pilot signal.

Embodiments of the present disclosure provide a communication method. A first device can receive first information from a second device, where the first information is used to indicate a first pilot signal of a control channel, and the first pilot signal is one or more of a plurality of pilot signals. In this way, by indicating the first pilot signal of the control channel through the first information, the flexibility of the first pilot signal can be improved; after receiving the first information, the first device can obtain the first pilot signal matching its actual wireless environment, thereby achieving good performance.

The communication method provided by the embodiments of the present disclosure is described in detail below with reference to specific application scenarios.

Assume that there are multiple different DMRSs for the control channel in the system. For simplicity of description, the embodiments of the present disclosure take two DMRSs as an example, denoted as a first DMRS and a second DMRS (the first pilot signal in the foregoing embodiments may be the first DMRS or the second DMRS). The first DMRS and the second DMRS may have different configurations in one or more of: power parameter, time domain position, frequency domain position, sequence generation parameter, or sequence generation method.

It should be noted that it can be easily and directly extended to more different DMRSs, which will not be described one by one.

A first terminal device may receive first information sent by a network device or a second terminal device (corresponding to the Sidelink scenario), where the first information is used to indicate the first DMRS and/or the second DMRS of the control channel, thereby being able to flexibly configure the DMRS of the control channel, better match the wireless environment, and improve system performance.

In the case where the first information is sent by a first network device, the control channel corresponds to a downlink control channel (e.g., PDCCH).

In the case where the first information is sent by a second terminal device, the control channel corresponds to a sidelink control channel (e.g., PSCCH).

In some embodiments, the first information may be implemented through a combination of one or more of the following messages/signaling:
broadcast message MIB, which can notify all terminal devices, reducing total signaling overhead;
system messages SIB1, SIB, which can notify all terminal devices, reducing total signaling overhead;
RRC signaling, which allows each terminal device to be configured individually, providing more targeted improvement of each terminal device's performance, with better reliability than MAC CE signaling and DCI;
MAC CE signaling, which allows each terminal device to be configured individually, providing more targeted improvement of each terminal device's performance, with lower latency than RRC signaling and better reliability than DCI;
DCI signaling, which allows each terminal device to be configured individually, providing more targeted improvement of each terminal device's performance, with lower latency than RRC signaling and MAC CE signaling;
downlink messages in the random access procedure, such as MsgB, Msg2, Msg4, which can be pre-configured, improving system performance; or
AI/ML dedicated signaling, which can improve efficiency.

For example, the first information may be indicated through RRC signaling and MAC CE signaling. For another example, the first information may be indicated through a system message and RRC signaling. Other combinations are not exemplified one by one and can be directly generalized.

For using the same type of signaling/message, it may also be indicated by multiple pieces of the same type of signaling/message, and different information in the first information may be indicated through different RRC signaling.

In the embodiments of the present disclosure, different instances of first information may indicate different DMRSs. For example, in one configuration, the first information may indicate the first DMRS, while in another configuration, the first information may indicate the second DMRS.

In some embodiments, the first information includes at least one information field, and specific implementations may have different implementations:

Indicating whether it is the first DMRS or the second DMRS through different values of an information field (i.e., the first information field). For example, when the information field takes one value, it indicates the first DMRS; when the information field takes another value, it indicates the second DMRS.

It should be noted that more than two DMRSs can be indicated through different values of the information field, not limited to two DMRSs, thus providing better flexibility.

(2) When an information field (i.e., the second information field) is configured, it indicates the first DMRS; when the information field is not configured, the control channel uses the second DMRS, and in this case, the information field implicitly indicates the second DMRS. In this case, the second DMRS is a default DMRS. The second DMRS may be determined according to pre-defined rules (e.g., protocol specification)/network broadcast information/system information, thereby saving signaling overhead.

It should be noted that when the information field is configured, its value may be "Enabled" or "Support", or variations thereof (e.g., Enable, Supported, and other related forms).

(3) When an information field is configured, it indicates the second DMRS; when the information field is not configured, the control channel uses the first DMRS, and in this case, the information field implicitly indicates the first DMRS, thereby saving signaling overhead.

It should be noted that the first information may indicate whether it is the first DMRS or the second DMRS by configuring different fields through a CHOICE structure.

The following two embodiments describe in detail respectively for the case where the first DMRS is an orthogonal DMRS and the case where it is not.

### Embodiment 1: The first DMRS is an orthogonal DMRS.

In some embodiments, the REs of the first DMRS and the REs used for control information are non-overlapping, i.e., the first DMRS uses different REs from the control information; the REs of the second DMRS and the REs used for control information are non-overlapping, i.e., the second DMRS uses different REs from the control information. That is, the first DMRS and/or the second DMRS are orthogonal to the control information on time-frequency resources. Based on this, by using the orthogonal DMRS in the related art, introducing a new DMRS is avoided, thereby reducing system complexity.

The time-frequency resources used by the first DMRS and the second DMRS are different, i.e., at least part of the time-frequency resources used by the first DMRS and the second DMRS are different. For example, the time-frequency resources used by the first DMRS and the second DMRS may differ in one or more of the following:
power parameters of the first DMRS and the second DMRS are different;
frequency domain positions of the first DMRS and the second DMRS are different;
time domain positions of the first DMRS and the second DMRS are different;
sequence generation methods of the first DMRS and the second DMRS are different; or
sequence generation parameters of the first DMRS and the second DMRS are different.

In some embodiments, relevant parameters of the first DMRS and/or the second DMRS may be pre-defined, and whether to use the first DMRS or the second DMRS is indicated through an information field in the first information. For example, the first information contains one or more information fields, and different values are used to indicate different DMRSs. Based on this, by pre-defining relevant parameters of the first DMRS and/or the second DMRS, signaling overhead is reduced.

In other embodiments, relevant parameters of the first DMRS may be pre-defined, i.e., the first DMRS is a default DMRS; the first information indicates relevant parameters of the second DMRS. For example, the first information contains one or more information fields, and the information fields are used to indicate relevant parameters of the second DMRS; when the information field is not configured, the second DMRS may be the default DMRS. Based on this, by pre-defining the first DMRS, signaling overhead can be reduced, while also providing sufficient flexibility to configure the second DMRS.

It should be noted that the first DMRS and the second DMRS may have one or more of:
power parameter;
frequency domain position;
time domain position;
sequence generation parameter; or
sequence generation method.

### Embodiment 2: The first DMRS is not an orthogonal DMRS.

In some embodiments, the REs of the second DMRS and the REs used for control information are non-overlapping, i.e., the second DMRS uses different REs from the control information. That is, the second DMRS is orthogonal to the control information on time-frequency resources. One or more or all REs of the first DMRS are also REs used for control information (for simplicity of description, we refer to these REs as shared REs). Based on this, the first DMRS and the control information can use the same REs, thereby allowing the control information to use more REs, improving transmission reliability.

In some embodiments, relevant parameters of the first DMRS and the second DMRS may be pre-defined, and whether to use the first DMRS or the second DMRS is indicated through an information field in the first information. For example, the first information contains an information field, and different values of the information field are used to indicate different DMRSs. Different DMRSs may also be indicated by whether an information field is configured. For example, when the information field is not configured, it indicates the second DMRS, and when the information field is configured, it indicates the first DMRS; for another example, when the information field is not configured, it indicates the first DMRS, and when the information field is configured, it indicates the second DMRS. Based on this, by pre-defining relevant parameters of the first DMRS and the second DMRS, signaling overhead can be reduced.

In other embodiments, relevant parameters of the first DMRS may be pre-defined, i.e., the first DMRS is a default DMRS; the first information indicates relevant parameters of the second DMRS through an information field. For example, the first information contains one or more information fields, and the information fields are used to indicate relevant parameters of the second DMRS; when the information field is not configured, the second DMRS may be the default DMRS. Based on this, by pre-defining relevant parameters of the first DMRS, signaling overhead can be reduced, while also providing sufficient flexibility to configure the second DMRS.

In other embodiments, relevant parameters of the second DMRS may be pre-defined, i.e., the second DMRS is a default DMRS; the first information indicates relevant parameters of the first DMRS through an information field. For example, the first information contains one or more information fields, and the information fields are used to indicate parameters of the first DMRS; when the information field is not configured, the first DMRS may be the default DMRS. Based on this, by pre-defining relevant parameters of the second DMRS, signaling overhead can be reduced, while also providing sufficient flexibility to configure the first DMRS.

In other embodiments, the first information may indicate relevant parameters of the first DMRS, or relevant parameters of the second DMRS. For example, the first information contains one or more information fields, and the information fields are used to indicate parameters of the first DMRS or the second DMRS. For another example, the first information indicates whether it is the first DMRS or the second DMRS by configuring different fields through a CHOICE structure. These two different fields in the CHOICE structure are referred to as a third information field and a fourth information field. When the third information field is configured, it is used to indicate the first DMRS; when the fourth information field is configured, it is used to indicate the second DMRS. Based on this, by flexibly configuring each DMRS, optimization space is provided for the system.

In some embodiments, the second DMRS may have one or more of:
power parameter;
frequency domain position;
time domain position;
sequence generation parameter; or
sequence generation method.

In some embodiments, the first information may indicate a power parameter of the first DMRS, or the power parameter of the first DMRS may be pre-defined (e.g., pre-defined by a protocol, or pre-defined by network broadcast information, etc.).

It should be noted that "power" involved in the embodiments of the present disclosure may also be directly extended to "energy", which is not limited in the embodiments of the present disclosure.

Through this method, when the power parameter of the first DMRS is indicated by the first information, the power allocation of the first DMRS can be flexibly indicated, enabling the system to optimize the transmission power of the first DMRS according to the wireless environment, improving system performance; when the power parameter of the first DMRS is pre-defined, signaling overhead can be saved.

In some embodiments, the power parameter may include one or more of:
a ratio of power with which the first DMRS is sent on a shared RE to total power on the shared RE (i.e., total power of DMRS and data);
a ratio of power with which control information is sent on a shared RE to total power on the shared RE (i.e., total power of DMRS and control information);
a ratio of the power with which the first DMRS is sent on a shared RE to the power with which control information is sent on the shared RE;
a ratio of the power with which control information is sent on a shared RE to the power with which the first DMRS is sent on the shared RE;
a ratio of power with which the first DMRS is sent on a shared RE to total power on one RE (regardless of whether this RE is a shared RE); or
a ratio of power with which control information is sent on a shared RE to total power on one RE (regardless of whether this RE is a shared RE).

It should be noted that the above ratios may be linear values or dB values. For example, a linear value of 0.1 corresponds to a dB value of -10dB, or 10dB.

In the embodiments of the present disclosure, the first information may indicate a frequency domain position of the first DMRS, or the frequency domain position of the first DMRS may be pre-defined (e.g., pre-defined by a protocol, or pre-defined by network broadcast information, etc.). Based on this, the frequency domain position of the first DMRS can be flexibly changed, thereby facilitating multi-user multiplexing and reducing DMRS interference between users.

In some embodiments, the first information may indicate a frequency domain density of the first DMRS (e.g., the number of REs occupied by the first DMRS within one RB), and/or a frequency domain offset value of the first DMRS (e.g., an RE offset value).

In some embodiments, the first information may indicate which frequency domain resources are occupied by the first DMRS by means of a Bitmap or by directly indicating identifiers of frequency domain resources (e.g., RE, RB). Based on this, the flexibility of the first information indication can be improved.

In some embodiments, the first information may directly indicate which frequency domain pattern the first DMRS adopts, and these candidate frequency domain patterns may be determined by pre-defined rules and/or network device configuration. A frequency domain pattern may identify which resources in the frequency domain can be used for the first DMRS. Based on this, signaling overhead can be reduced.

In the embodiments of the present disclosure, the first information may indicate a time domain position of the first DMRS, or the time domain position of the first DMRS may be pre-defined (e.g., pre-defined by a protocol, or pre-defined by network broadcast information, etc.). Based on this, the time domain position of the first DMRS can be flexibly changed, thereby achieving a good compromise between performance and complexity.

In some embodiments, the first information may indicate a time domain density of the first DMRS (e.g., the number of symbols occupied by the first DMRS within one slot), and/or a time domain offset value of the first DMRS (e.g., a symbol offset value).

In some embodiments, the first information may indicate which time domain resources are occupied by the first DMRS by means of a Bitmap or by directly indicating identifiers of time domain resources. Based on this, the flexibility of the first information indication can be improved.

In some embodiments, the first information may directly indicate which time domain pattern the first DMRS adopts, and these candidate time domain patterns may be determined by pre-defined rules and/or network device configuration. A time domain pattern may identify which resources in the time domain can be used for the first DMRS. Based on this, signaling overhead can be reduced.

In some embodiments, the first information may indicate a sequence generation parameter of the first DMRS. The sequence generation parameter of the first DMRS signal may include one or more of:
an identifier of a slot in the time-frequency resources occupied by the first DMRS signal;
an identifier of a symbol of the time-frequency resources occupied by the first DMRS signal; and/or an identifier of a symbol of the time-frequency resources occupied by the first DMRS signal within one slot, within one sub-frame, or within one frame;
an identifier of an SFN where the first DMRS signal is located;
an identifier of a cell where the first DMRS signal is located, for example, an identifier of a physical layer cell;
an identifier of a carrier where the first DMRS signal is located, where the carrier may be a component carrier in carrier aggregation;
an identifier of a port of the first DMRS signal, where sequence generation corresponding to port i of the first DMRS signal may be based on the port identifier i;
a scrambling parameter of the first DMRS signal;
an identifier of the control channel, for example, a group identifier corresponding to a CORESET; or
other parameters configured by the network device.

It should be noted that each group of sequence generation parameters of the first DMRS signal indicated by the first information may include one or more of the above sequence generation parameters.

Through this method, the sequence of the first DMRS signal can be randomized, reducing sequence interference of DMRS signals between multiple layers, and improving system performance.

In the embodiments of the present disclosure, Embodiment 1 and Embodiment 2 can be combined, for example, the first information may indicate different DMRSs. Taking the first information indicating three DMRSs as an example, two DMRSs are orthogonal to the control information, and one DMRS is non-orthogonal to the control information.

In some embodiments, the first information may be configured for different objects:
the first information is configured for one cell, i.e., the first information may be information in configuration information of a control channel in one cell. Based on this, signaling overhead can be reduced;
the first information is configured for one carrier, i.e., the first information may be information in configuration information of a control channel in one carrier. Based on this, signaling overhead can be reduced;
the first information is configured for one BWP, i.e., the first information may be information in configuration information of a control channel in one BWP. Based on this, signaling overhead can be reduced;
the first information is configured for PSCCH, i.e., the first information may be information in configuration information of one PSCCH channel. Based on this, signaling overhead can be reduced;
the first information is configured for a CORESET, i.e., the first information may be information in configuration information of one CORESET, and the first information may indicate the corresponding CORESET. Based on this, more flexible control of each CORESET can be achieved, providing greater freedom for network optimization;
the first information is configured for a CORESET group, i.e., the first information may be information in configuration information of one CORESET group, and the first information may indicate the corresponding CORESET group. In the NR communication system, one CORESET group may be referred to as a CORESET pool. Based on this, more flexible control of each CORESET can be achieved, providing greater freedom for network optimization;
the first information may be configured for a search space, i.e., the first information may be information in configuration information of one search space, and the first information may indicate the corresponding search space. Based on this, more flexible control of each search space can be achieved, providing greater freedom for network optimization.

In some embodiments, the DMRS indicated by the first information may not be used for one or more of:
transmission corresponding to CORESET numbered 0, i.e., CORESET 0;
transmission corresponding to search space numbered 0, i.e., Search Space 0;
transmission corresponding to the CORESET corresponding to search space numbered 0;
transmission corresponding to the search space for receiving SIB1 message;
transmission corresponding to the CORESET corresponding to the search space for receiving SIB1 message;
transmission corresponding to the search space for receiving other system messages, where the other system messages are messages other than SIB1;
transmission corresponding to the CORESET corresponding to the search space for receiving other system messages;
transmission corresponding to the search space for paging;
transmission corresponding to the CORESET corresponding to the search space for paging;
transmission corresponding to the search space for random access;
transmission corresponding to the CORESET corresponding to the search space for random access;
transmission corresponding to a common search space.

Through this method, the above one or more items still use the system default or pre-defined DMRS, thereby avoiding a fuzzy phase when switching between different DMRSs and improving system stability.

It should be noted that, according to the first information, the first terminal device may use the DMRS for corresponding control channel reception. Exemplarily, the first terminal device may receive two pieces of first information, one piece of first information corresponding to one CORESET, and the other piece of first information corresponding to another CORESET. This can be extended to more pieces of first information, which will not be described again in the embodiments of the present disclosure.

In some embodiments, when the number of repeated transmissions of the control channel includes at least two, the number of DMRSs corresponding to the control channel includes at least two, and the at least two DMRSs maintain the same configuration in one or more of:
whether the at least two DMRSs use one or more identical REs as the control information (i.e., at least one Shared RE);
whether all REs occupied by the at least two DMRSs are simultaneously used for control information (i.e., all REs of the DMRSs are Shared REs);
frequency domain density;
time domain density; or
power parameter.

Exemplarily, assuming the control channel is repeatedly transmitted twice, and the number of DMRSs corresponding to the control channel is two, one of the DMRSs may be a non-orthogonal DMRS, and the other DMRS may be an orthogonal DMRS. Based on this, even if the performance of the non-orthogonal DMRS is poor, the PDCCH of the orthogonal DMRS can be used for independent demodulation.

In some embodiments, for a data channel (e.g., PDSCH, or PSSCH), there may be an independent DMRS configuration information. The DMRS corresponding to the data channel and the control channel maintain the same configuration or share some configurations in one or more of:
all REs occupied by the DMRS are used for data information or control information transmission (i.e., all REs occupied by the DMRS are Shared REs);
the DMRS corresponding to the data channel and the control channel have one or more REs used for data information or control information transmission (the DMRS corresponding to the data channel and the control channel both include at least one Shared RE); or the DMRS corresponding to the data channel and the control channel have no REs used for data information or control information transmission (i.e., the DMRS corresponding to the data channel and the control channel have no Shared REs);
same power parameter;
same sequence generation method (single-port DMRS for data PDSCH);
frequency domain density; or
time domain density.

It should be noted that, in the case where the DMRS corresponding to the data channel and the control channel do not maintain the same configured parameters, it can be considered that the control channel and the data channel are independently configured.

In some embodiments, when the first information may indicate that the control channel uses a non-orthogonal DMRS, the DMRS used by the data channel (e.g., PDSCH, or PSSCH) scheduled by the control channel also has at least one RE used for data information transmission. That is, if the control channel uses a non-orthogonal DMRS, the corresponding data channel also uses a non-orthogonal DMRS. Based on this, the same type of DMRS can reduce the processing complexity of the first terminal device.

In some embodiments, before the first terminal device receives the first information, the first terminal device may send first capability information to the first network device and/or the second terminal device, where the first capability information indicates that the first terminal device supports receiving the first information; or the first capability information indicates that the first terminal device supports 2 or more DMRSs for the control channel.

In some embodiments, before the first terminal device receives the first information, the first terminal device may send second capability information to the first network device and/or the second terminal device, where the second capability information indicates that the first terminal device supports the first DMRS of the control channel, and one or more or all REs of the first DMRS are also REs used for control information (i.e., Shared REs).

Exemplarily, the first capability information and/or the second capability information may be transmitted through RRC signaling or MAC CE.

It should be noted that the first capability information and/or the second capability information may be capability information for a frequency band. That is, different frequency bands can independently report corresponding first capability information and/or second capability information. Based on this, the first terminal device can have greater freedom. For example, the first terminal device may support reporting corresponding first capability information and/or second capability information on some frequency bands, and not support reporting corresponding first capability information and/or second capability information on other frequency bands, thereby enabling more first terminal devices to support reporting corresponding first capability information and/or second capability information.

It should also be noted that the first capability information and/or the second capability information may be capability information for a band combination, that is, different band combinations can independently report corresponding first capability information and/or second capability information. Based on this, the first terminal device can have greater freedom. For example, the first terminal device may support reporting corresponding first capability information and/or second capability information on some band combinations, and not support reporting corresponding first capability information and/or second capability information on other band combinations, thereby enabling more first terminal devices to support reporting corresponding first capability information and/or second capability information.

It should also be noted that the first capability information and/or the second capability information may be capability information for each frequency band in a band combination, that is, each frequency band in different band combinations can independently report corresponding first capability information and/or second capability information. Based on this, the first terminal device can have greater freedom. For example, the first terminal device may not support reporting corresponding first capability information and/or second capability information in a certain carrier aggregation combination, but may support reporting corresponding first capability information and/or second capability information on some frequency bands in another CA combination, thereby enabling more first terminal devices to support reporting corresponding first capability information and/or second capability information.

It should also be noted that the first capability information and/or the second capability information may be capability information for each carrier on each frequency band in a band combination, that is, different component carriers in frequency bands in different band combinations can independently report corresponding first capability information and/or second capability information. Based on this, the first terminal device can have greater freedom. For example, different band combinations can independently report corresponding first capability information and/or second capability information, and different carriers on one frequency band can also independently report corresponding first capability information and/or second capability information, thereby enabling more first terminal devices to support reporting corresponding first capability information and/or second capability information.

It should also be noted that the first capability information and/or the second capability information may be capability information for FR, that is, different FRs can independently report corresponding first capability information and/or second capability information. Based on this, the first terminal device can have greater freedom. For example, there are two FRs, denoted as low-frequency FR (i.e., FR1) and high-frequency FR (i.e., FR2). FR1 may not support reporting corresponding first capability information and/or second capability information, and FR2 may support reporting corresponding first capability information and/or second capability information, thereby enabling more first terminal devices to support reporting corresponding first capability information and/or second capability information.

It should also be noted that the first capability information and/or the second capability information may be capability information for the first terminal device. Based on this, in the case where the first terminal device reports the first capability information and/or the second capability information, it can be considered that the first terminal device can support reporting the first capability information and/or the second capability information on all frequency bands, thereby reducing the signaling overhead for capability reporting of the first terminal device.

In some embodiments, for the DMRS of the control channel, the first capability information and/or the second capability information may include one or more of the following capabilities:
supported power parameter;
supported frequency domain pattern of DMRS;
supported time domain pattern of DMRS;
supported frequency domain density of DMRS; or
supported time domain density of DMRS.

In the embodiments of the present disclosure, the first terminal device can receive first information from the network device or the second terminal device, where the first information is used to indicate a DMRS of the control channel, and the DMRS of the control channel is one or more of a plurality of pilot signals. In this way, by indicating the DMRS of the control channel through the first information, the flexibility of the DMRS can be improved; after receiving the first information, the first terminal device can obtain a DMRS matching its actual wireless environment, thereby achieving good performance.

The preferred embodiments of the present disclosure have been described in detail above with reference to the accompanying drawings. However, the present disclosure is not limited to the specific details of the above embodiments. Within the scope of the technical concept of the present disclosure, various simple modifications can be made to the technical solutions of the present disclosure, and these simple modifications all fall within the protection scope of the present disclosure. For example, the specific technical features described in the above specific embodiments can be combined in any suitable manner without contradiction. To avoid unnecessary repetition, various possible combinations are not described separately in the present disclosure. For another example, various different embodiments of the present disclosure can also be combined arbitrarily, as long as they do not violate the idea of the present disclosure, and they should also be regarded as the content disclosed in the present disclosure. For another example, without conflict, the various embodiments and/or technical features in the various embodiments described in the present disclosure can be arbitrarily combined with the prior art, and the technical solutions obtained after combination shall also fall within the protection scope of the present disclosure.

It should also be understood that in various method embodiments of the present disclosure, the sequence numbers of the above processes do not imply the order of execution, and the execution order of the processes should be determined by their functions and internal logic, and should not constitute any limitation on the implementation process of the embodiments of the present disclosure.

FIG. 12 is a schematic structural composition diagram of a communication apparatus 1200 provided by an embodiment of the present disclosure, applied to a first device, where the first device may be the first terminal device in the foregoing embodiments. As shown in FIG. 12, the communication apparatus 1200 may include a first receiving unit 1210.

The first receiving unit 1210 is configured to receive first information from a second device, where the first information is used to indicate a first pilot signal of a control channel, and the first pilot signal is one or more of a plurality of pilot signals.

In some embodiments, the plurality of pilot signals have different configurations in one or more of:
power parameter;
time domain position of occupied time-frequency resources;
frequency domain position of occupied time-frequency resources;
sequence generation method; or
sequence generation parameter.

In some embodiments, the time-frequency resources occupied by the first pilot signal are not used for transmitting control information of the control channel; or at least part of the time-frequency resources occupied by the first pilot signal are used for transmitting control information of the control channel.

In some embodiments, the first information includes a first information field, and a value of the first information field indicates the first pilot signal.

In some embodiments, the first information includes a second information field, and the second information field indicates the first pilot signal when configured; or the second information field indicates the first pilot signal when not configured.

In some embodiments, the first information indicates one or more of the following parameters of the first pilot signal; or one or more of the following parameters of the first pilot signal are pre-defined:
power parameter;
frequency domain position of occupied time-frequency resources;
time domain position of occupied time-frequency resources;
sequence generation method; or
sequence generation parameter.

In some embodiments, in the case where at least part of the time-frequency resources occupied by the first pilot signal are used for transmitting control information of the control channel, the power parameter of the first pilot signal includes one or more of:
a ratio of power with which the first pilot signal is sent on a first time-frequency resource to total power on a second time-frequency resource;
a ratio of power with which the control information of the control channel is sent on the first time-frequency resource to the total power on the second time-frequency resource;
a ratio of the power with which the first pilot signal is sent on the first time-frequency resource to the power with which the control information of the control channel is sent on the first time-frequency resource; or
a ratio of the power with which the control information of the control channel is sent on the first time-frequency resource to the power with which the first pilot signal is sent on the first time-frequency resource;
wherein the first time-frequency resource is any one of the at least part of the time-frequency resources; the second time-frequency resource is any one of the at least part of the time-frequency resources, or the second time-frequency resource is any one of other time-frequency resources except the at least part of the time-frequency resources.

In some embodiments, the frequency domain position is determined according to one or more of the following parameters indicated by the first information: frequency domain density; frequency domain offset value; or frequency domain pattern.

In some embodiments, the first information indicates the frequency domain position through a first bitmap; and/or the first information indicates the frequency domain position through an identifier of a frequency domain resource.

In some embodiments, the time domain position is determined according to one or more of the following parameters indicated by the first information: time domain density; time domain offset value; or time domain pattern.

In some embodiments, the first information indicates the time domain position through a second bitmap; and/or the first information indicates the time domain position through an identifier of a time domain resource.

In some embodiments, the sequence generation parameter of the first pilot signal includes one or more of:
an identifier of a time domain resource among the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port of the first pilot signal;
a scrambling parameter of the first pilot signal; or
an identifier of the control channel.

In some embodiments, the first information indicates for one or more of:
a cell;
a carrier;
a bandwidth part;
a physical sidelink control channel;
a control resource set;
a control resource set group; or
a search space.

In some embodiments, the first pilot signal is not used for one or more of:
transmission corresponding to a control resource set identified by a first value;
transmission corresponding to a search space identified by a second value;
transmission corresponding to a control resource set corresponding to a search space identified by a third value;
transmission corresponding to a search space for system information block 1 reception;
transmission corresponding to a control resource set corresponding to a search space for system information block 1 reception;
transmission corresponding to a search space for other system information reception, where the other system information is system information other than system information block 1;
transmission corresponding to a control resource set corresponding to a search space other system information;
transmission corresponding to a search space for paging;
transmission corresponding to a control resource set corresponding to a search space for paging;
transmission corresponding to a search space for random access;
transmission corresponding to a control resource set corresponding to a search space for random access; and
transmission corresponding to a common search space.

Exemplarily, the first value is 0.

Exemplarily, the second value is 0.

Exemplarily, the third value is 0.

In some embodiments, when the number of repeated transmissions of the control channel includes at least two, the number of first pilot signals includes at least two.

Here, at least two first pilot signals maintain the same configuration in one or more of:
at least part of time-frequency resources respectively occupied by the at least two first pilot signals are used for transmitting control information of the control channel;
frequency domain densities of time-frequency resources respectively occupied by the at least two first pilot signals;
time domain densities of time-frequency resources respectively occupied by the at least two first pilot signals; or
power parameters respectively of the at least two first pilot signals.

In some embodiments, time-frequency resources occupied by at least one of the at least two first pilot signals are not used for transmitting control information of the control channel, and at least part of time-frequency resources occupied by at least another one of the at least two first pilot signals are used for transmitting control information of the control channel.

In some embodiments, a second pilot signal of a data channel scheduled by first downlink control information DCI transmitted on the control channel and the first pilot signal maintain the same configuration in one or more of:
at least part of time-frequency resources occupied by the second pilot signal are used for transmitting data information of the data channel, and at least part of time-frequency resources occupied by the first pilot signal are used for transmitting control information of the control channel;
time-frequency resources occupied by the second pilot signal are not used for transmitting data information of the data channel, and time-frequency resources occupied by the first pilot signal are not used for transmitting control information of the control channel;
power parameters of the second pilot signal and the first pilot signal respectively;
sequence generation methods of the second pilot signal and the first pilot signal respectively;
frequency domain densities of time-frequency resources occupied by the second pilot signal and the first pilot signal respectively; or
time domain densities of time-frequency resources occupied by the second pilot signal and the first pilot signal respectively.

In some embodiments, as shown in FIG. 12, the communication apparatus 1200 may further include a first sending unit 1220, wherein:
the first sending unit 1220 is configured to send first capability information to the second device, where the first capability information represents that the first device supports receiving the first information; or the first capability information indicates that the first device supports a plurality of pilot signals for the control channel.

In some embodiments, the first sending unit 1220 is further configured to send second capability information to the second device, where the second capability information represents that the first device supports the first pilot signal, and at least part of time-frequency resources occupied by the first pilot signal are used for transmitting control information of the control channel.

In some embodiments, the first capability information and/or the second capability information is capability information for any one of the following objects:
a frequency band;
a band combination;
each frequency band in a band combination;
each carrier on each frequency band in a band combination;
a frequency range;
the first device.

In some embodiments, the first capability information and/or the second capability information includes one or more of:
a supported power parameter of the first pilot signal;
a supported frequency domain pattern of the first pilot signal;
a supported time domain pattern of the first pilot signal;
a supported frequency domain density of the first pilot signal; or
a supported time domain density of the first pilot signal.

In some embodiments, the first information is carried by one or more of:
a broadcast message;
a system message;
radio resource control RRC signaling;
media access control element MAC CE signaling;
DCI;
a random access message; or
dedicated signaling.

In some embodiments, the control channel includes a downlink control channel and/or a sidelink control channel.

Embodiments of the present disclosure provide a communication apparatus. A first device can receive first information from a second device, where the first information is used to indicate a first pilot signal of a control channel, and the first pilot signal is one or more of a plurality of pilot signals. In this way, by indicating the first pilot signal of the control channel through the first information, the flexibility of the first pilot signal can be improved; after receiving the first information, the first device can obtain the first pilot signal matching its actual wireless environment, thereby achieving good performance.

Those skilled in the art should understand that the relevant description of the above communication apparatus in the embodiments of the present disclosure can be understood with reference to the relevant description of the communication method in the embodiments of the present disclosure.

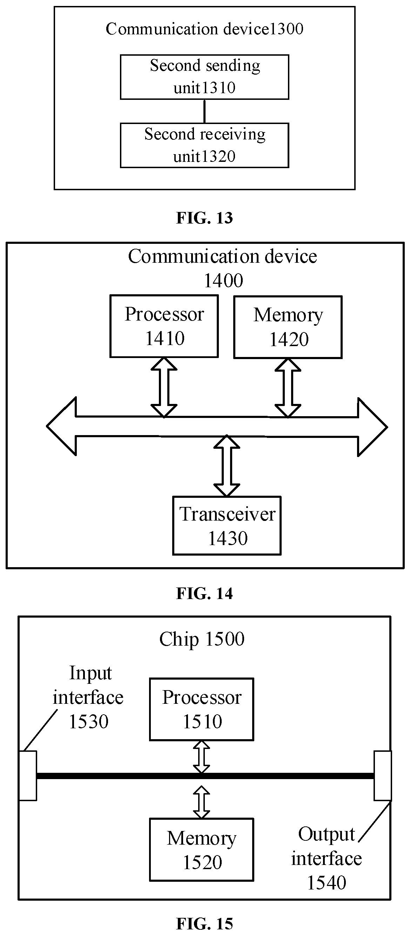

FIG. 13 is a schematic structural composition diagram of a communication apparatus 1300 provided by an embodiment of the present disclosure, applied to a second device, where the second device may be the second terminal device or network device in the foregoing embodiments. As shown in FIG. 13, the communication apparatus 1300 may include a second sending unit 1310.

The second sending unit 1310 is configured to send first information to a first device, where the first information is used to indicate a first pilot signal of a control channel, and the first pilot signal is one or more of a plurality of pilot signals.

In some embodiments, the plurality of pilot signals have different configurations in one or more of:
power parameter;
time domain position of occupied time-frequency resources;
frequency domain position of occupied time-frequency resources;
sequence generation method; or
sequence generation parameter.

In some embodiments, the time-frequency resources occupied by the first pilot signal are not used for transmitting control information of the control channel; or at least part of the time-frequency resources occupied by the first pilot signal are used for transmitting control information of the control channel.

In some embodiments, the first information includes a first information field, and a value of the first information field indicates the first pilot signal.

In some embodiments, the first information includes a second information field, and the second information field indicates the first pilot signal when configured; or the second information field indicates the first pilot signal when not configured.

In some embodiments, the first information indicates one or more of the following parameters of the first pilot signal; or one or more of the following parameters of the first pilot signal are pre-defined:
power parameter;
frequency domain position of occupied time-frequency resources;
time domain position of occupied time-frequency resources;
sequence generation method; or
sequence generation parameter.

In some embodiments, in the case where at least part of the time-frequency resources occupied by the first pilot signal are used for transmitting control information of the control channel, the power parameter of the first pilot signal includes one or more of:
a ratio of power with which the first pilot signal is sent on a first time-frequency resource to total power on a second time-frequency resource;
a ratio of power with which the control information of the control channel is sent on the first time-frequency resource to the total power on the second time-frequency resource;
a ratio of the power with which the first pilot signal is sent on the first time-frequency resource to the power with which the control information of the control channel is sent on the first time-frequency resource; or
a ratio of the power with which the control information of the control channel is sent on the first time-frequency resource to the power with which the first pilot signal is sent on the first time-frequency resource.

Here, the first time-frequency resource is any one of the at least part of the time-frequency resources; the second time-frequency resource is any one of the at least part of the time-frequency resources, or the second time-frequency resource is any one of other time-frequency resources except the at least part of the time-frequency resources.

In some embodiments, the frequency domain position is determined according to one or more of the following parameters indicated by the first information: frequency domain density; frequency domain offset value; or frequency domain pattern.

In some embodiments, the first information indicates the frequency domain position through a first bitmap; and/or the first information indicates the frequency domain position through an identifier of a frequency domain resource.

In some embodiments, the time domain position is determined according to one or more of the following parameters indicated by the first information: time domain density; time domain offset value; or time domain pattern.

In some embodiments, the first information indicates the time domain position through a second bitmap; and/or the first information indicates the time domain position through an identifier of a time domain resource.

In some embodiments, the sequence generation parameter of the first pilot signal includes one or more of:
an identifier of a time domain resource among the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port of the first pilot signal;
a scrambling parameter of the first pilot signal; or
an identifier of the control channel.

In some embodiments, the first information indicates for one or more of:
a cell;
a carrier;
a bandwidth part;
a physical sidelink control channel;
a control resource set;
a control resource set group; or
a search space.

In some embodiments, the first pilot signal is not used for one or more of:
transmission corresponding to a control resource set identified by a first value;
transmission corresponding to a search space identified by a second value;
transmission corresponding to a control resource set corresponding to a search space identified by a third value;
transmission corresponding to a search space for system information block 1 reception;
transmission corresponding to a control resource set corresponding to a search space for system information block 1 reception;
transmission corresponding to a search space for other system information reception, where the other system information is system information other than system information block 1;
transmission corresponding to a control resource set corresponding to a search space other system information;
transmission corresponding to a search space for paging;
transmission corresponding to a control resource set corresponding to a search space for paging;
transmission corresponding to a search space for random access;
transmission corresponding to a control resource set corresponding to a search space for random access; and
transmission corresponding to a common search space.

Exemplarily, the first value is 0.

Exemplarily, the second value is 0.

Exemplarily, the third value is 0.

In some embodiments, when the number of repeated transmissions of the control channel includes at least two, the number of first pilot signals includes at least two.

Here, at least two first pilot signals maintain the same configuration in one or more of:
at least part of time-frequency resources respectively occupied by the at least two first pilot signals are used for transmitting control information of the control channel;
frequency domain densities of time-frequency resources respectively occupied by the at least two first pilot signals;
time domain densities of time-frequency resources respectively occupied by the at least two first pilot signals; or
power parameters respectively of the at least two first pilot signals.

In some embodiments, time-frequency resources occupied by at least one of the at least two first pilot signals are not used for transmitting control information of the control channel, and at least part of time-frequency resources occupied by at least another one of the at least two first pilot signals are used for transmitting control information of the control channel.

In some embodiments, a second pilot signal of a data channel scheduled by first downlink control information DCI transmitted on the control channel and the first pilot signal maintain the same configuration in one or more of:
at least part of time-frequency resources occupied by the second pilot signal are used for transmitting data information of the data channel, and at least part of time-frequency resources occupied by the first pilot signal are used for transmitting control information of the control channel;
time-frequency resources occupied by the second pilot signal are not used for transmitting data information of the data channel, and time-frequency resources occupied by the first pilot signal are not used for transmitting control information of the control channel;
power parameters of the second pilot signal and the first pilot signal respectively;
sequence generation methods of the second pilot signal and the first pilot signal respectively;
frequency domain densities of time-frequency resources occupied by the second pilot signal and the first pilot signal respectively; or
time domain densities of time-frequency resources occupied by the second pilot signal and the first pilot signal respectively.

In some embodiments, as shown in FIG. 13, the communication apparatus 1300 may further include a second receiving unit 1320.

The second receiving unit 1320 is configured to receive first capability information from the first device, where the first capability information represents that the first device supports receiving the first information; or the first capability information indicates that the first device supports a plurality of pilot signals for the control channel.

In some embodiments, the second receiving unit 1320 is further configured to receive second capability information from the first device, where the second capability information represents that the first device supports the first pilot signal, and at least part of time-frequency resources occupied by the first pilot signal are used for transmitting control information of the control channel.

In some embodiments, the first capability information and/or the second capability information is capability information for any one of the following objects:
a frequency band;
a band combination;
each frequency band in a band combination;
each carrier on each frequency band in a band combination;
a frequency range;
the first device.

In some embodiments, the first capability information and/or the second capability information includes one or more of:
a supported power parameter of the first pilot signal;
a supported frequency domain pattern of the first pilot signal;
a supported time domain pattern of the first pilot signal;
a supported frequency domain density of the first pilot signal; or
a supported time domain density of the first pilot signal.

In some embodiments, the first information is carried by one or more of:
a broadcast message;
a system message;
radio resource control RRC signaling;
media access control element MAC CE signaling;
downlink control information DCI;
a random access message; or
dedicated signaling.

In some embodiments, the control channel includes a downlink control channel and/or a sidelink control channel.

Embodiments of the present disclosure provide a communication apparatus. A second device can send first information to a first device, where the first information is used to indicate a first pilot signal of a control channel, and the first pilot signal is one or more of a plurality of pilot signals. In this way, by indicating the first pilot signal of the control channel through the first information, the flexibility of the first pilot signal can be improved; a first pilot signal matching the actual wireless environment of the first device can be obtained, enabling the first device to achieve good performance.

Those skilled in the art should understand that the relevant description of the above communication apparatus in the embodiments of the present disclosure can be understood with reference to the relevant description of the communication method in the embodiments of the present disclosure.

FIG. 14 is a schematic structural diagram of a communication device according to an embodiment of the present disclosure. The communication device 1400 may be a first device or a second device; wherein the first device may be the first terminal device in the foregoing embodiments, and the second device may be the second terminal device or network device in the foregoing embodiments. The communication device 1400 shown in FIG. 14 may include a processor 1410 and a memory 1420.

The memory 1420 may be configured to store computer-executable instructions.

The processor 1410, connected to the memory 1420, is configured to implement the method in the embodiments of the present disclosure by executing the computer-executable instructions.

The memory 1420 may be a separate device independent of the processor 1410, or may be integrated into the processor 1410.

In some embodiments, as shown in FIG. 14, the communication device 1400 may further include a transceiver 1430, and the processor 1410 may control the transceiver 1430 to communicate with other devices, specifically, may send information or data to other devices, or receive information or data sent by other devices.

The transceiver 1430 may include a transmitter and a receiver. The transceiver 1430 may further include an antenna, and the number of antennas may be one or more.

In some embodiments, the communication device 1400 may be the first device in the embodiments of the present disclosure, and the communication device 1400 may implement the corresponding processes implemented by the first device in the various methods of the embodiments of the present disclosure. For brevity, details are not repeated here.

In some embodiments, the communication device 1400 may be the second device in the embodiments of the present disclosure, and the communication device 1400 may implement the corresponding processes implemented by the second device in the various methods of the embodiments of the present disclosure. For brevity, details are not repeated here.

FIG. 15 is a schematic structural diagram of a chip according to an embodiment of the present disclosure. The chip 1500 shown in FIG. 15 includes a processor 1510 and a memory 1520, wherein:

the processor 1510 may call and run a computer program from the memory 1520, so that a device installed with the chip executes the method in the embodiments of the present disclosure.

The memory 1520 may be a separate device independent of the processor 1510, or may be integrated into the processor 1510.

In some embodiments, the chip 1500 may further include an input interface 1530. The processor 1510 may control the input interface 1530 to communicate with other devices or chips, specifically, may obtain information or data sent by other devices or chips.

In some embodiments, the chip 1500 may further include an output interface 1540. The processor 1510 may control the output interface 1540 to communicate with other devices or chips, specifically, may output information or data to other devices or chips.

In some embodiments, the chip may be applied to the first device (e.g., the first terminal device) in the embodiments of the present disclosure, and the chip may implement the corresponding processes implemented by the first device in the various methods of the embodiments of the present disclosure. For brevity, details are not repeated here.

In some embodiments, the chip may be applied to the second device (e.g., the second terminal device, or the network device) in the embodiments of the present disclosure, and the chip may implement the corresponding processes implemented by the second device in the various methods of the embodiments of the present disclosure. For brevity, details are not repeated here.

It should be understood that the chip mentioned in the embodiments of the present disclosure may also be referred to as a system-on-chip, system on chip, chip system, or system-on-a-chip, etc.

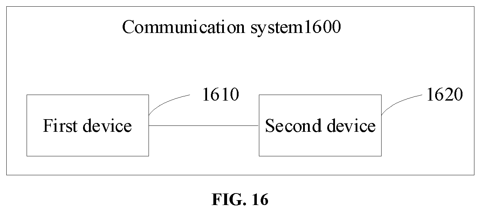

FIG. 16 is a schematic block diagram of a communication system according to an embodiment of the present disclosure. As shown in FIG. 16, the communication system 1600 includes a first device 1610 and a second device 1620.

The first device 1610 may be the first terminal device in the foregoing embodiments, and the second device 1620 may be the second terminal device or network device in the foregoing embodiments. The first device 1610 may be configured to implement the corresponding functions implemented by the first device in the above methods, and the second device 1620 may be configured to implement the corresponding functions implemented by the second device in the above methods. For brevity, details are not repeated here.

It should be understood that the processor in the embodiments of the present disclosure may be an integrated circuit chip having signal processing capabilities. In the implementation process, each step of the above method embodiments may be completed by an integrated logic circuit of hardware in the processor or instructions in the form of software. The above processor may be a general-purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, steps, and logic blocks disclosed in the embodiments of the present disclosure may be implemented or executed. The general-purpose processor may be a microprocessor, or the processor may be any conventional processor, etc. The steps of the methods disclosed in the embodiments of the present disclosure may be directly embodied as being executed by a hardware decoding processor, or executed by a combination of hardware and software modules in a decoding processor. The software module may be located in a mature storage medium in the art, such as a random access memory, a flash memory, a read-only memory, a programmable read-only memory, or an electrically erasable programmable memory, a register, etc. The storage medium is located in the memory, and the processor reads information in the memory and completes the steps of the above methods in combination with its hardware.

It can be understood that the memory in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of exemplary but not limiting description, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable types of memory.

It should be understood that the above memory is exemplary but not limiting; for example, the memory in the embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synch link DRAM (SLDRAM), and Direct Rambus RAM (DR RAM), etc. That is, the memory in the embodiments of the present disclosure is intended to include, but is not limited to, these and any other suitable types of memory.

An embodiment of the present disclosure also provides a computer-readable storage medium storing a computer program, where the computer program, when executed by at least one processor, implements the method in the embodiments of the present disclosure.

In some embodiments, the computer-readable storage medium may be applied to the first device (e.g., the first terminal device) in the embodiments of the present disclosure, and the computer program causes a computer to execute the corresponding processes implemented by the first device in the various methods of the embodiments of the present disclosure. For brevity, details are not repeated here.

In some embodiments, the computer-readable storage medium may be applied to the second device (e.g., the second terminal device, or the network device) in the embodiments of the present disclosure, and the computer program causes a computer to execute the corresponding processes implemented by the second device in the various methods of the embodiments of the present disclosure. For brevity, details are not repeated here.

An embodiment of the present disclosure also provides a computer program product, including a computer storage medium storing a computer program, where the computer program includes instructions executable by at least one processor, and when the instructions are executed by the at least one processor, the method in the embodiments of the present disclosure is implemented.

In some embodiments, the computer program product may be applied to the first device (e.g., the first terminal device) in the embodiments of the present disclosure, and the computer program instructions cause a computer to execute the corresponding processes implemented by the first device in the various methods of the embodiments of the present disclosure. For brevity, details are not repeated here.

In some embodiments, the computer program product may be applied to the second device (e.g., the second terminal device, or the network device) in the embodiments of the present disclosure, and the computer program instructions cause a computer to execute the corresponding processes implemented by the second device in the various methods of the embodiments of the present disclosure. For brevity, details are not repeated here.

An embodiment of the present disclosure also provides a computer program, which causes a computer to execute the method in the embodiments of the present disclosure.

In some embodiments, the computer program may be applied to the first device (e.g., the first terminal device) in the embodiments of the present disclosure, and when the computer program runs on a computer, it causes the computer to execute the corresponding processes implemented by the first device in the various methods of the embodiments of the present disclosure. For brevity, details are not repeated here.

In some embodiments, the computer program may be applied to the second device (e.g., the second terminal device, or the network device) in the embodiments of the present disclosure, and when the computer program runs on a computer, it causes the computer to execute the corresponding processes implemented by the second device in the various methods of the embodiments of the present disclosure. For brevity, details are not repeated here.

A person of ordinary skill in the art can appreciate that the units and algorithm steps of the examples described in conjunction with the embodiments disclosed herein can be implemented in electronic hardware, or a combination of computer software and electronic hardware. Whether these functions are executed in hardware or software depends on the specific application and design constraints of the technical solution. Professional technicians may use different methods to implement the described functions for each specific application, but such implementation should not be considered beyond the scope of the present disclosure.

Those skilled in the art can clearly understand that for the convenience and brevity of description, the specific working processes of the systems, apparatuses, and units described above can refer to the corresponding processes in the foregoing method embodiments, and details are not repeated here.

In the several embodiments provided in the present disclosure, it should be understood that the disclosed systems, apparatuses, and methods may be implemented in other ways. For example, the apparatus embodiments described above are only illustrative. For example, the division of the units is only a logical function division, and there may be other division methods in actual implementation. For example, multiple units or components may be combined or integrated into another system, or some features may be ignored or not executed. In addition, the mutual coupling or direct coupling or communication connection shown or discussed may be indirect coupling or communication connection through some interfaces, apparatuses, or units, and may be in electrical, mechanical, or other forms.

The units described as separate components may or may not be physically separate, and the components shown as units may or may not be physical units, that is, they may be located in one place, or may be distributed over multiple network units. Some or all of the units may be selected according to actual needs to achieve the objectives of the solutions of the embodiments.

In addition, each functional unit in each embodiment of the present disclosure may be integrated into one processing unit, or each unit may exist physically separately, or two or more units may be integrated into one unit.

If the functions are implemented in the form of software functional units and sold or used as independent products, they may be stored in a computer-readable storage medium. Based on this understanding, the technical solution of the present disclosure essentially, or the part contributing to the prior art, or part of the technical solution, may be embodied in the form of a software product stored in a storage medium, including several instructions for causing a computer device (which may be a personal computer, a server, or a network device, etc.) to execute all or part of the steps of the methods described in the various embodiments of the present disclosure. The foregoing storage medium includes: a U disk, a removable hard disk, a Read-Only Memory (ROM), a Random Access Memory (RAM), a magnetic disk, or an optical disk, and other media that can store program codes.

The above is only a specific implementation of the present disclosure, but the protection scope of the present disclosure is not limited thereto. Any person skilled in the art can easily conceive of changes or substitutions within the technical scope disclosed in the present disclosure, which should be covered within the protection scope of the present disclosure. Therefore, the protection scope of the present disclosure shall be subject to the protection scope of the claims.

## Claims

1. A communication method, comprising:
receiving, by a first device, first information from a second device, wherein the first information is used to indicate a first pilot signal of a control channel, and the first pilot signal is one or more of a plurality of pilot signals.

2. The method according to claim 1, wherein the plurality of pilot signals have different configurations in one or more of:
a power parameter;
a time domain position of occupied time-frequency resources;
a frequency domain position of occupied time-frequency resources;
a sequence generation method; or
a sequence generation parameter.

3. The method according to claim 1 or 2, wherein
the time-frequency resources occupied by the first pilot signal are not used for transmitting control information of the control channel; or
at least part of the time-frequency resources occupied by the first pilot signal are used for transmitting the control information of the control channel.

4. The method according to any one of claims 1 to 3, wherein the first information comprises a first information field, and a value of the first information field indicates the first pilot signal.

5. The method according to any one of claims 1 to 3, wherein the first information comprises a second information field, and the second information field indicates the first pilot signal when configured; or the second information field indicates the first pilot signal when not configured.

6. The method according to any one of claims 1 to 5, wherein the first information indicates one or more of the following parameters of the first pilot signal; or one or more of the following parameters of the first pilot signal are pre-defined:
a power parameter;
a frequency domain position of occupied time-frequency resources;
a time domain position of occupied time-frequency resources;
a sequence generation method; or
a sequence generation parameter.

7. The method according to claim 6, wherein in the case where at least part of the time-frequency resources occupied by the first pilot signal are used for transmitting control information of the control channel, the power parameter of the first pilot signal comprises one or more of:
a ratio of power with which the first pilot signal is sent on a first time-frequency resource to total power on a second time-frequency resource;
a ratio of power with which the control information of the control channel is sent on the first time-frequency resource to the total power on the second time-frequency resource;
a ratio of the power with which the first pilot signal is sent on the first time-frequency resource to the power with which the control information of the control channel is sent on the first time-frequency resource; or
a ratio of the power with which the control information of the control channel is sent on the first time-frequency resource to the power with which the first pilot signal is sent on the first time-frequency resource;
wherein the first time-frequency resource is any one of the at least part of the time-frequency resources; and the second time-frequency resource is any one of the at least part of the time-frequency resources, or the second time-frequency resource is any one of other time-frequency resources except the at least part of the time-frequency resources.

8. The method according to claim 6 or 7, wherein the frequency domain position of the time-frequency resources occupied by the first pilot signal is determined according to one or more of the following parameters indicated by the first information:
a frequency domain density;
a frequency domain offset value; or
a frequency domain pattern.

9. The method according to any one of claims 6 to 8, wherein the first information indicating the frequency domain position of the time-frequency resources occupied by the first pilot signal comprises:
the first information indicating the frequency domain position through a first bitmap; and/or
the first information indicating the frequency domain position through an identifier of a frequency domain resource.

10. The method according to any one of claims 6 to 9, wherein the time domain position of the time-frequency resources occupied by the first pilot signal is determined according to one or more of the following parameters indicated by the first information:
a time domain density;
a time domain offset value; or
a time domain pattern.

11. The method according to any one of claims 6 to 10, wherein the first information indicating the time domain position of the time-frequency resources occupied by the first pilot signal comprises:
the first information indicating the time domain position through a second bitmap; and/or
the first information indicating the time domain position through an identifier of a time domain resource.

12. The method according to any one of claims 6 to 11, wherein the sequence generation parameter of the first pilot signal comprises one or more of:
an identifier of a time domain resource among the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port of the first pilot signal;
a scrambling parameter of the first pilot signal; or
an identifier of the control channel.

13. The method according to any one of claims 1 to 12, wherein the first information indicates for one or more of:
a cell;
a carrier;
a bandwidth part;
a physical sidelink control channel;
a control resource set;
a control resource set group; or
a search space.

14. The method according to any one of claims 1 to 13, wherein the first pilot signal is not used for one or more of:
transmission corresponding to a control resource set identified by a first value;
transmission corresponding to a search space identified by a second value;
transmission corresponding to a control resource set corresponding to a search space identified by a third value;
transmission corresponding to a search space for system information block 1 reception;
transmission corresponding to a control resource set corresponding to a search space for system information block 1 reception;
transmission corresponding to a search space other system information, wherein the other system information is system information other than system information block 1;
transmission corresponding to a control resource set corresponding to the search space other system information;
transmission corresponding to a search space for paging;
transmission corresponding to a control resource set corresponding to the search space for paging;
transmission corresponding to a search space for random access;
transmission corresponding to a control resource set corresponding to the search space for random access; or
transmission corresponding to a common search space.

15. The method according to any one of claims 1 to 14, wherein when a number of repeated transmissions of the control channel comprises at least two, a number of the first pilot signals comprises at least two;
wherein the at least two first pilot signals maintain a same configuration in one or more of:
at least part of time-frequency resources respectively occupied by the at least two first pilot signals are used for transmitting control information of the control channel;
frequency domain densities of time-frequency resources respectively occupied by the at least two first pilot signals;
time domain densities of time-frequency resources respectively occupied by the at least two first pilot signals; or
power parameters respectively of the at least two first pilot signals.

16. The method according to claim 15, wherein time-frequency resources occupied by at least one of the at least two first pilot signals are not used for transmitting control information of the control channel, and at least part of time-frequency resources occupied by at least another one of the at least two first pilot signals are used for transmitting control information of the control channel.

17. The method according to any one of claims 1 to 16, wherein a second pilot signal of a data channel scheduled by first downlink control information (DCI) transmitted on the control channel and the first pilot signal maintain a same configuration in one or more of:
at least part of time-frequency resources occupied by the second pilot signal are used for transmitting data information of the data channel, and at least part of time-frequency resources occupied by the first pilot signal are used for transmitting control information of the control channel;
time-frequency resources occupied by the second pilot signal are not used for transmitting data information of the data channel, and time-frequency resources occupied by the first pilot signal are not used for transmitting control information of the control channel;
power parameters of the second pilot signal and the first pilot signal respectively;
sequence generation methods of the second pilot signal and the first pilot signal respectively;
frequency domain densities of time-frequency resources occupied by the second pilot signal and the first pilot signal respectively; or
time domain densities of time-frequency resources occupied by the second pilot signal and the first pilot signal respectively.

18. The method according to any one of claims 1 to 17, wherein before the first device receives the first information from the second device, the method further comprises:
sending, by the first device, first capability information to the second device, wherein the first capability information represents that the first device supports receiving the first information; or the first capability information represents that the first device supports the plurality of pilot signals for the control channel.

19. The method according to any one of claims 1 to 18, wherein before the first device receives the first information from the second device, the method further comprises:
sending, by the first device, second capability information to the second device, wherein the second capability information represents that the first device supports the first pilot signal, and at least part of time-frequency resources occupied by the first pilot signal are used for transmitting control information of the control channel.

20. The method according to claim 18 or 19, wherein the first capability information and/or the second capability information is capability information for any one of the following objects:
a frequency band;
a band combination;
each frequency band in a band combination;
each carrier on each frequency band in a band combination;
a frequency range; or
the first device.

21. The method according to any one of claims 18 to 20, wherein the first capability information and/or the second capability information comprises one or more of:
a supported power parameter of the first pilot signal;
a supported frequency domain pattern of the first pilot signal;
a supported time domain pattern of the first pilot signal;
a supported frequency domain density of the first pilot signal; or
a supported time domain density of the first pilot signal.

22. The method according to any one of claims 1 to 21, wherein the first information is carried by one or more of:
a broadcast message;
a system message;
Radio Resource Control (RRC) signaling;
Media Access Control Element (MAC CE) signaling;
downlink control information (DCI);
a random access message; or
dedicated signaling.

23. The method according to any one of claims 1 to 22, wherein the control channel comprises a downlink control channel and/or a sidelink control channel.

24. A communication method, comprising:
sending, by a second device, first information to a first device, wherein the first information is used to indicate a first pilot signal of a control channel, and the first pilot signal is one or more of a plurality of pilot signals.

25. The method according to claim 24, wherein the plurality of pilot signals have different configurations in one or more of:
a power parameter;
a time domain position of occupied time-frequency resources;
a frequency domain position of occupied time-frequency resources;
a sequence generation method; or
a sequence generation parameter.

26. The method according to claim 24 or 25, wherein
the time-frequency resources occupied by the first pilot signal are not used for transmitting control information of the control channel; or
at least part of the time-frequency resources occupied by the first pilot signal are used for transmitting the control information of the control channel.

27. The method according to any one of claims 24 to 26, wherein the first information comprises a first information field, and a value of the first information field indicates the first pilot signal.

28. The method according to any one of claims 24 to 26, wherein the first information comprises a second information field, and the second information field indicates the first pilot signal when configured; or the second information field indicates the first pilot signal when not configured.

29. The method according to any one of claims 24 to 28, wherein the first information indicates one or more of the following parameters of the first pilot signal; or one or more of the following parameters of the first pilot signal are pre-defined:
a power parameter;
a frequency domain position of occupied time-frequency resources;
a time domain position of occupied time-frequency resources;
a sequence generation method; or
a sequence generation parameter.

30. The method according to claim 29, wherein in the case where at least part of the time-frequency resources occupied by the first pilot signal are used for transmitting control information of the control channel, the power parameter of the first pilot signal comprises one or more of:
a ratio of power with which the first pilot signal is sent on a first time-frequency resource to total power on a second time-frequency resource;
a ratio of power with which the control information of the control channel is sent on the first time-frequency resource to the total power on the second time-frequency resource;
a ratio of the power with which the first pilot signal is sent on the first time-frequency resource to the power with which the control information of the control channel is sent on the first time-frequency resource; or
a ratio of the power with which the control information of the control channel is sent on the first time-frequency resource to the power with which the first pilot signal is sent on the first time-frequency resource;
wherein the first time-frequency resource is any one of the at least part of the time-frequency resources; and the second time-frequency resource is any one of the at least part of the time-frequency resources, or the second time-frequency resource is any one of other time-frequency resources except the at least part of the time-frequency resources.

31. The method according to claim 29 or 30, wherein the frequency domain position of the time-frequency resources occupied by the first pilot signal is determined according to one or more of the following parameters indicated by the first information:
a frequency domain density;
a frequency domain offset value; or
a frequency domain pattern.

32. The method according to any one of claims 29 to 31, wherein the first information indicating the frequency domain position of the time-frequency resources occupied by the first pilot signal comprises:
the first information indicating the frequency domain position through a first bitmap; and/or
the first information indicating the frequency domain position through an identifier of a frequency domain resource.

33. The method according to any one of claims 29 to 32, wherein the time domain position of the time-frequency resources occupied by the first pilot signal is determined according to one or more of the following parameters indicated by the first information:
a time domain density;
a time domain offset value; or
a time domain pattern.

34. The method according to any one of claims 29 to 33, wherein the first information indicating the time domain position of the time-frequency resources occupied by the first pilot signal comprises:
the first information indicating the time domain position through a second bitmap; and/or
the first information indicating the time domain position through an identifier of a time domain resource.

35. The method according to any one of claims 29 to 34, wherein the sequence generation parameter of the first pilot signal comprises one or more of:
an identifier of a time domain resource among the time-frequency resources occupied by the first pilot signal;
an identifier of a system frame number where the first pilot signal is located;
an identifier of a cell where the first pilot signal is located;
an identifier of a carrier where the first pilot signal is located;
an identifier of a port of the first pilot signal;
a scrambling parameter of the first pilot signal; or
an identifier of the control channel.

36. The method according to any one of claims 24 to 35, wherein the first information indicates for one or more of:
a cell;
a carrier;
a bandwidth part;
a physical sidelink control channel;
a control resource set;
a control resource set group; or
a search space.

37. The method according to any one of claims 24 to 36, wherein the first pilot signal is not used for one or more of:
transmission corresponding to a control resource set identified by a first value;
transmission corresponding to a search space identified by a second value;
transmission corresponding to a control resource set corresponding to a search space identified by a third value;
transmission corresponding to a search space for system information block 1 reception;
transmission corresponding to a control resource set corresponding to a search space for system information block 1 reception;
transmission corresponding to a search space other system information, wherein the other system information is system information other than system information block 1;
transmission corresponding to a control resource set corresponding to the search space other system information;
transmission corresponding to a search space for paging;
transmission corresponding to a control resource set corresponding to the search space for paging;
transmission corresponding to a search space for random access;
transmission corresponding to a control resource set corresponding to the search space for random access; or
transmission corresponding to a common search space.

38. The method according to any one of claims 24 to 37, wherein when a number of repeated transmissions of the control channel comprises at least two, a number of the first pilot signals comprises at least two;
wherein the at least two first pilot signals maintain a same configuration in one or more of:
at least part of time-frequency resources respectively occupied by the at least two first pilot signals are used for transmitting control information of the control channel;
frequency domain densities of time-frequency resources respectively occupied by the at least two first pilot signals;
time domain densities of time-frequency resources respectively occupied by the at least two first pilot signals; or
power parameters respectively of the at least two first pilot signals.

39. The method according to claim 38, wherein time-frequency resources occupied by at least one of the at least two first pilot signals are not used for transmitting control information of the control channel, and at least part of time-frequency resources occupied by at least another one of the at least two first pilot signals are used for transmitting control information of the control channel.

40. The method according to any one of claims 24 to 39, wherein a second pilot signal of a data channel scheduled by first downlink control information (DCI) transmitted on the control channel and the first pilot signal maintain a same configuration in one or more of:
at least part of time-frequency resources occupied by the second pilot signal are used for transmitting data information of the data channel, and at least part of time-frequency resources occupied by the first pilot signal are used for transmitting control information of the control channel;
time-frequency resources occupied by the second pilot signal are not used for transmitting data information of the data channel, and time-frequency resources occupied by the first pilot signal are not used for transmitting control information of the control channel;
power parameters of the second pilot signal and the first pilot signal respectively;
sequence generation methods of the second pilot signal and the first pilot signal respectively;
frequency domain densities of time-frequency resources occupied by the second pilot signal and the first pilot signal respectively; or
time domain densities of time-frequency resources occupied by the second pilot signal and the first pilot signal respectively.

41. The method according to any one of claims 24 to 40, wherein before the second device sends the first information to the first device, the method further comprises:
receiving, by the second device, first capability information from the first device, wherein the first capability information represents that the first device supports receiving the first information; or the first capability information represents that the first device supports the plurality of pilot signals for the control channel.

42. The method according to any one of claims 24 to 41, wherein before the second device sends the first information to the first device, the method further comprises:
receiving, by the second device, second capability information from the first device, wherein the second capability information represents that the first device supports the first pilot signal, and at least part of time-frequency resources occupied by the first pilot signal are used for transmitting control information of the control channel.

43. The method according to claim 41 or 42, wherein the first capability information and/or the second capability information is capability information for any one of the following objects:
a frequency band;
a band combination;
each frequency band in a band combination;
each carrier on each frequency band in a band combination;
a frequency range; or
the first device.

44. The method according to any one of claims 41 to 43, wherein the first capability information and/or the second capability information comprises one or more of:
a supported power parameter of the first pilot signal;
a supported frequency domain pattern of the first pilot signal;
a supported time domain pattern of the first pilot signal;
a supported frequency domain density of the first pilot signal; or
a supported time domain density of the first pilot signal.

45. The method according to any one of claims 24 to 44, wherein the first information is carried by one or more of:
a broadcast message;
a system message;
Radio Resource Control (RRC) signaling;
Media Access Control Element (MAC CE) signaling;
downlink control information (DCI);
a random access message; or
dedicated signaling.

46. The method according to any one of claims 24 to 45, wherein the control channel comprises a downlink control channel and/or a sidelink control channel.

47. A communication apparatus, applied to a first device, the apparatus comprising:
a first receiving unit configured to receive first information from a second device, wherein the first information is used to indicate a first pilot signal of a control channel, and the first pilot signal is one or more of a plurality of pilot signals.

48. A communication apparatus, applied to a second device, the apparatus comprising:
a second sending unit configured to send first information to a first device, wherein the first information is used to indicate a first pilot signal of a control channel, and the first pilot signal is one or more of a plurality of pilot signals.

49. A communication device, comprising:
a memory configured to store computer-executable instructions;
a processor, connected to the memory, configured to implement the method according to any one of claims 1 to 23, or the method according to any one of claims 24 to 46, by executing the computer-executable instructions.

50. A chip, comprising:
a processor configured to call and run a computer program from a memory, so that a device installed with the chip executes the method according to any one of claims 1 to 23, or executes the method according to any one of claims 24 to 46.

51. A computer-readable storage medium storing a computer program, wherein the computer program, when executed by at least one processor, implements the method according to any one of claims 1 to 23, or implements the method according to any one of claims 24 to 46.

52. A computer program product, comprising a computer storage medium storing a computer program, wherein the computer program comprises instructions executable by at least one processor, and when the instructions are executed by the at least one processor, the method according to any one of claims 1 to 23, or the method according to any one of claims 24 to 46, is implemented.

53. A computer program, wherein the computer program causes a computer to execute the method according to any one of claims 1 to 23, or to implement the method according to any one of claims 24 to 46.
